(19) Europäisches Patentamt
European Patent Office
Office européen des brevets

(11) **EP 3 556 967 B1**

(12) **EUROPÄISCHE PATENTSCHRIFT**

(45) Veröffentlichungstag und Bekanntmachung des Hinweises auf die Patenterteilung:
**30.08.2023  Patentblatt 2023/35**

(21) Anmeldenummer: **19167225.2**

(22) Anmeldetag: **04.04.2019**

(51) Internationale Patentklassifikation (IPC):
**E04G 21/04** (2006.01)     **B66C 13/06** (2006.01)
**B25J 9/00** (2006.01)

(52) Gemeinsame Patentklassifikation (CPC):
**E04G 21/0436; B25J 9/1651; E04G 21/0454;**
G05B 19/042

(54) **GROSSMANIPULATOR, INSBESONDERE FÜR BETONPUMPEN**

LARGE MANIPULATOR, ESPECIALLY FOR CONCRETE PUMPS

MANIPULATEUR DE GRANDE TAILLE, EN PARTICULIER POUR POMPES À BÉTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2018   DE 102018109088**

(43) Veröffentlichungstag der Anmeldung:
**23.10.2019   Patentblatt 2019/43**

(73) Patentinhaber: **Liebherr-Mischtechnik GmbH**
**88427 Bad Schussenried (DE)**

(72) Erfinder:
• **WANNER, Julian**
**70195 Stuttgart (DE)**
• **SAWODNY, Oliver**
**70186 Stuttgart (DE)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**EP-A2- 1 772 588       WO-A1-2016/131977**
**CN-B- 105 317 217      JP-A- H10 331 426**

• **Sophie Zorn: "Modellbasierte aktive Schwingungstilgung eines Multilink-Groÿraummanipulators", , 8. Dezember 2017 (2017-12-08), XP055616776, Gefunden im Internet: URL:https://d-nb.info/1156851432/34 [gefunden am 2019-08-29]**
• **XIE GANG ET AL: "Modelling and Simulation of the Coupled Rigid-flexible Multibody Systems in MWorks", PROCEEDINGS OF THE 48TH SCANDINAVIAN CONFERENCE ON SIMULATION AND MODELING (SIMS 2007), Bd. 76, 19. November 2012 (2012-11-19), Seiten 405-416, XP055616801, Sweden (Goteborg) ISSN: 1650-3686, DOI: 10.3384/ecp12076405 ISBN: 978-91-7685-817-2**
• **Nehrig Oliver: "Entwurf und Realisierung eines Beschleunigungssensorsystems auf der Basis von in Silizium integrierter Mikromechanik für die besonderen Anforderungen bei Schwerlasthandhabungssystemen", , 4 April 2003 (2003-04-04), pages 1-156, XP055923326, Internet Retrieved from the Internet: URL:https://d-nb.info/967968259/34 [retrieved on 2022-05-19]**

EP 3 556 967 B1

**Beschreibung**

Die vorliegende Erfindung betrifft einen Großmanipulator, insbesondere für Betonpumpen, mit einem Gelenkarm, welcher einen um eine vertikale Achse drehbaren Drehbock und/oder mindestens ein mittels eines Gelenkes um eine horizontale Achse verschwenkbares Segment aufweist, wobei der Drehbock über einen Aktuator um die vertikale Achse verfahrbar ist und/oder das mindestens eine Segment über einen Aktuator um die horizontale Achse verschwenkbar ist, und mit einer Steuerung zur Ansteuerung der Aktuatoren, wobei die Steuerung eine Schwingungsdämpfung zur Dämpfung von horizontalen und/oder vertikalen Schwingungen des Gelenkarms umfasst. Insbesondere handelt es sich bei der Betonpumpe um eine Autobetonpumpe.

Eine detaillierte Darstellung des relevanten Stands der Technik findet sich im einleitenden Teil der Figurenbeschreibung. Insbesondere werden in der WO 2014 165889 A1 Drehratensensoren als Teil von Inertialmesseinheiten (IMUs) eingesetzt, um die Position der Segmente des Mastarms zu bestimmen. Die Schwingungsdämpfung erfolgt dagegen durch Rückkopplung der Signale eines Deformationssensors. Die WO 2016 131977 A1 verwendet weiterhin eine Inertialmesseinheit zur Regelung der Position der Mastspitze. Die Druckschrift EP 2 103 760 B1 schlägt eine modellbasierte Schwingungsdämpfung unter Nutzung eines modalen Modells vor.

Druckschrift CN 105 317 217 B zeigt eine Auslegerschwingungsunterdrückungsvorrichtung, welche umfasst: eine Empfangsvorrichtung zum Empfangen eines Winkels zwischen einem Auslegerabschnitt und einer Bezugsebene beim Stoppen des Auslegerschwingvorgangs und einer Schwenkgeschwindigkeit des Auslegers, sowie eine Steuervorrichtung, die die Endverschiebung des Auslegers basierend auf dem eingeschlossenen Winkel und der Schwenkgeschwindigkeit vorhersagt: und einen Steuerstrom an den Schwenkaktor des Auslegers basierend auf der vorhergesagten Endverschiebung des Auslegers anlegt um eine Schwingschwingung des Auslegers zu unterdrücken.

Der Artikel XIE GANG et al., "Modelling and Simulation of the Coupled Rigid-Flexible Multibody Systems in MWorks", Proceedings of the 48th Scandinavian conference in simulation and modeling (SIMS 2007), Bd. 76, 405-416, 2012, Goteburg zeigt eine Modellierung einer Betonpumpe in der Modelica Toolbox MWorks.

Die Publikation Oliver Nehrig, Entwurf und Realisierung eines Beschleunigungssensorsystems auf der Basis von in Silizium integrierter Mikromechanik für die besonderen Anforderungen bei Schwerlasthandhabungssystemen, 04.04.2003, Seiten 1 - 156, XP055923326 beschäftigt sich mit der Entwicklung von mikromechanischen Beschleunigungssensoren insbesondere zum Einsatz bei einer Betonpumpe.

JP H10 331426 A beschreibt eine Betonpumpe, bei welcher die Pumpfrequenz reduziert wird, wenn die am Mastarm gemessenen Schwingungen einen Grenzwert überschreiten.

Aufgabe der vorliegenden Erfindung ist es, einen Großmanipulator mit einer verbesserten Schwingungsdämpfung zur Verfügung zu stellen.

Diese Aufgabe wird in einem ersten Aspekt durch einen Großmanipulator gemäß Anspruch 1, in einem zweiten Aspekt durch einen Großmanipulator gemäß Anspruch 4 und in einem dritten Aspekt durch einen Großmanipulator gemäß Anspruch 6 gelöst.

Bevorzugte Ausgestaltungen der vorliegenden Erfindung sind Gegenstand der Unteransprüche.

Die vorliegende Anmeldung umfasst in einem ersten Aspekt einen Großmanipulator, insbesondere für Betonpumpen, mit einem Gelenkarm, welcher einen um eine vertikale Achse drehbaren Drehbock und mindestens zwei mittels Gelenken um horizontale Achsen verschwenkbare Segmente aufweist, wobei der Drehbock über einen Aktuator um die vertikale Achse verfahrbar ist und die Segmente über Aktuatoren um die horizontalen Achsen verschwenkbar sind, einer Steuerung zur Ansteuerung der Aktuatoren, wobei die Steuerung eine Schwingungsdämpfung zur Dämpfung von horizontalen und/oder vertikalen Schwingungen des Gelenkarms umfasst, und mindestens einem Drehratensensor, dessen Messsignale in die Schwingungsdämpfung eingehen.

Gemäß der vorliegenden Erfindung bestimmt die Schwingungsdämpfung auf Grundlage der Messwerte des mindestens einen Drehratensensors aus den Schwingungen der einzelnen Segmente einen Schwingungszustand des gesamten Gelenkarms. Anders als in der WO 2014 165889 A1 werden die Drehratensensoren daher nicht nur zur Positionsbestimmung herangezogen, sondern bilden die Grundlage zur Bestimmung des Schwingungszustands des Gelenkarms. Anders als in der WO 2016 131977 A1 wird nicht nur die Position der Mastspitze betrachtet, sondern der Schwingungszustand des gesamten Gelenkarms bestimmt. Hierdurch ergibt sich eine deutlich bessere Schwingungsdämpfung.

Gemäß einer bevorzugten Ausgestaltung des ersten Aspektes erfolgt die Schwingungsdämpfung ohne die Verwendung von an den Segmenten angeordneten geodätischen Sensoren und/oder Inertialmesseinheiten und/oder Deformationssensoren. Die Erfinder der vorliegenden Anmeldung haben erkannt, dass eine Schwingungsdämpfung auf Grundlage der Drehratensensoren keine geodätischen Sensoren benötigt, wie sie in Inertialmesseinheiten zusammen mit den Drehratensensoren verbaut sind. Vielmehr können die Signale des oder der Drehratensensoren auch ohne geodätische Sensoren zur Bestimmung von Schwingungen herangezogen werden. Weiterhin haben die Erfinder erkannt, dass es aufgrund der Verwendung des oder der Drehratensensoren zur Erfassung von Schwingungen keiner Deformationssensoren mehr bedarf, um eine Schwingungsdämpfung zu implementieren.

In einer möglichen Ausgestaltung der vorliegenden Erfindung ist mindestens ein Drehratensensor in einem vorderen Bereich eines Segmentes angeordnet, welches zwischen dem Drehbock und einem die Mastspitze bildenden Segment im Gelenkarm angeordnet ist. Hierdurch können Schwingungen dieses Segmentes durch den Drehratensensor besonders gut erfasst werden. Bevorzugt wird das Signal des Drehratensensors dazu eingesetzt, um Schwingungen des Segmentes, an welchem er angeordnet ist, zu bestimmen. Als vorderer Bereich eines Segmentes im Sinne der vorliegenden Erfindung werden bevorzugt die vorderen, d.h. der Mastspitze zugewandten 25 % der Längenausdehnung des jeweiligen Segmentes betrachtet, weiter bevorzugt die vorderen 10 % der Längenausdehnung.

In einer möglichen Ausgestaltung der vorliegenden Erfindung sind auf mindestens zwei Segmenten Drehratensensoren angeordnet. Bevorzugt werden die Signale dieser Drehratensensoren dazu eingesetzt, um Schwingungen der Segmente, an welchem diese angeordnet sind, zu bestimmen.

Bevorzugt bestimmt die Schwingungsdämpfung auf Grundlage der Messwerte der mindestens zwei Drehratensensoren einen Schwingungszustand der Segmente und/oder des gesamten Arms.

Bevorzugt sind die Drehratensensoren jeweils in einem vorderen Bereich der Segmente angeordnet. Dies verbessert die Erfassung von Schwingungen dieser Segmente.

Bevorzugt sind die mindestens zwei Segmente, an welchen die Drehratensensoren angeordnet sind, zwischen dem Drehbock und einem die Mastspitze bildenden Segment im Gelenkarm angeordnet. Weiter bevorzugt ist an dem die Mastspitze bildenden Segment ein weiterer Drehratensensor angeordnet, welcher bevorzugt zur Bestimmung von Schwingungen der Mastspitze eingesetzt wird.

Gemäß dem ersten Aspekt der vorliegenden Erfindung umfasst der Großmanipulator zusätzlich zu den Drehratensensoren weiterhin den Drehgelenken zugeordnete Sensoren zur mittelbaren oder unmittelbaren Messung des jeweiligen Drehwinkels der Gelenke des Gelenkarms, wobei die Messsignale der Sensoren in die Steuerung des Großmanipulators eingehen. Diese können insbesondere dazu eingesetzt werden, um einen Drift der Messwerte, welcher bei Drehratensensoren konstruktionsbedingt nicht vermeidbar ist, auszugleichen.

Die Messsignale der Sensoren gehen bevorzugt in die Schwingungsdämpfung ein. Alternativ oder zusätzlich können die Messsignale der Sensoren zur Bestimmung der aktuellen Stellung des Gelenkarms dienen, und insbesondere für eine Positionsregelung des Gelenkarms genutzt werden.

Die vorliegende Erfindung umfasst in einem zweiten Aspekt einen Großmanipulator, insbesondere für Betonpumpen, mit einem Gelenkarm, welcher einen um eine vertikale Achse drehbaren Drehbock und/oder mindestens ein mittels eines Gelenkes um eine horizontale Achse verschwenkbares Segment aufweist, wobei der Drehbock über einen Aktuator um die vertikale Achse verfahrbar ist und/oder das mindestens eine Segment über einen Aktuator um die horizontale Achse verschwenkbar ist, und mit einer Steuerung zur Ansteuerung der Aktuatoren, wobei die Steuerung eine Schwingungsdämpfung zur Dämpfung von horizontalen und/oder vertikalen Schwingungen des Gelenkarms umfasst. Der zweite Aspekt ist dadurch gekennzeichnet, dass die Schwingungsdämpfung unter Verwendung eines physikalischen Modells des Gelenkarms erfolgt, bei welchem die Flexibilität mindestens eines Segmentes durch mindestens ein innerhalb dieses Segmentes angeordnetes virtuelles Gelenk beschrieben wird. Anders als bei den modalen Modellen des Schwingungszustands des Gelenkarms, wie sie im Stand der Technik eingesetzt wurden, hat ein solches Modell eine physikalische Interpretation. Weiterhin muss das Modell anders als ein modales Modell nicht für jede Stellung des Gelenkarms neu entworfen werden.

Bevorzugt wird zumindest die Flexibilität des unmittelbar am Drehbock angeordneten Segmentes durch ein entsprechendes virtuelles Gelenk berücksichtigt, da die Schwingungen diese Segmentes den größten Einfluss auf den Schwingungszustand des Gelenkarms haben. Alternativ oder zusätzlich kann die Flexibilität des letzten Segmentes, welches die Mastspitze bildet, berücksichtigt werden. Dieses ist üblicherweise am wenigsten stabil und daher am flexibelsten. Das virtuelle Gelenk kann jedoch auch in einem anderen Segment vorgesehen sein.

Bevorzugt wird die Flexibilität mehrerer und weiter bevorzugt aller Segmente durch mindestens ein innerhalb des jeweiligen Segmentes angeordnetes virtuelles Gelenk beschrieben.

In einer möglichen Ausgestaltung der vorliegenden Erfindung handelt es sich bei dem physikalischen Modell um ein Starrkörpermodell mit aktuierten Gelenken. Bevorzugt beschreibt das Modell mehrere und weiter bevorzugt alle Segmente des Gelenkarms, und gibt damit gleichzeitig die Stellung des Gelenkarms wieder. Die Schwingungsfähigkeit mindestens eines und bevorzugt mehrerer und weiter bevorzugt aller Segmente wird dann durch mindestens ein virtuelles Gelenk in den die tatsächlichen Segmente beschreibenden Starrkörpern beschrieben.

In einer möglichen Ausgestaltung der vorliegenden Erfindung ist dem virtuellen Gelenk ein Federelement und ein Dämpferelement zugeordnet. Hierdurch kann die Flexibilität des Segmentes beschrieben werden. Bevorzugt werden die Federkonstante und die Dämpferkonstante so gewählt werden, dass das virtuelle Gelenk die Größe der Durchbiegung und/oder Torsion und/oder erste Eigenfrequenz des realen Segmentes beschreibt. Das virtuelle Gelenk kann daher als eine erste Beschreibung der ersten Eigenschwingung des Segmentes in Frequenz und Amplitude betrachtet werden.

In einer möglichen Ausgestaltung der vorliegenden Erfindung sind innerhalb des Segmentes weniger als 10, weiter bevorzugt weniger als 5, weiter bevorzugt weniger als 3 und in einer möglichen Ausgestaltung genau ein virtuelles Gelenk vorgesehen. Dies verringert die Komplexität des Modells.

Soll nur eine Schwingung in der Vertikalen oder der Horizontalen berücksichtigt werden, so reicht ein virtuelles Gelenk mit nur einer Drehachse aus. Insbesondere kann zur Dämpfung von Schwingungen in der Vertikalen ein virtuelles Gelenk mit einer horizontalen Drehachse eingesetzt werden.

In einer bevorzugten Ausgestaltung der vorliegenden Erfindung weist das virtuelle Gelenk jedoch mindestens zwei und bevorzugt drei Freiheitsgrade der Bewegung auf.

Der erste und der zweite Aspekt der vorliegenden Erfindung können jeweils unabhängig voneinander zum Einsatz kommen. Insbesondere können die Drehratensensoren gemäß dem ersten Aspekt auch unter Verwendung eines anderen Modells des Schwingungszustands des Gelenkarms zum Einsatz kommen, als gemäß dem zweiten Aspekt vorgesehen. Weiterhin kann das Modell gemäß dem zweiten Aspekt auch mit anderen Sensoren als Drehratensensoren eingesetzt werden.

Bevorzugt kommen der erste und der zweite Aspekt jedoch in Kombination zum Einsatz.

Die vorliegende Erfindung umfasst in einem dritten Aspekt einen Großmanipulator, insbesondere für Betonpumpen, mit einem Gelenkarm, welcher einen um eine vertikale Achse drehbaren Drehbock und/oder mindestens ein mittels eines Gelenkes um eine horizontale Achse verschwenkbares Segment aufweist, wobei der Drehbock über einen Aktuator um die vertikale Achse verfahrbar ist und/oder das mindestens eine Segment über einen Aktuator um die horizontale Achse verschwenkbar ist, und mit einer Steuerung zur Ansteuerung der Aktuatoren, wobei die Steuerung eine Schwingungsdämpfung zur Dämpfung von horizontalen und/oder vertikalen Schwingungen des Gelenkarms umfasst. Der dritte Aspekt ist dadurch gekennzeichnet, dass die Schwingungsdämpfung eine Torsion mindestens eines Segmentes und/oder des Gelenkarms berücksichtigt. Die Erfinder der vorliegenden Erfindung haben erkannt, dass aufgrund der großen Länge des Gelenkarms die Torsion einen nicht unerheblichen Einfluss auf das Schwingungsverhalten des Gelenkarms besitzt. Die Berücksichtigung der Torsion ermöglicht daher eine deutlich verbesserte Reduktion von Schwingungen. Erfindungsgemäß findet die Torsion bei einer horizontalen Schwingungsdämpfung, welche durch Ansteuerung des Aktors des Drehschemels erfolgt, Berücksichtigung.

In einer möglichen Ausgestaltung der vorliegenden Erfindung erfolgt die Berücksichtigung der Torsion mindestens eines Segmentes und/oder des Gelenkarms durch Verwendung eines physikalischen Modell des Gelenkarms, welches eine Torsion des Gelenkarms und/oder eines oder mehrerer Segmente des Gelenkarms beschreibt. Weiter bevorzugt erfolgt dies über ein virtuelles Drehgelenk gemäß dem zweiten Aspekt der vorliegenden Erfindung, welches sich in Längsrichtung des Segmentes erstreckt.

In einer möglichen Ausgestaltung der vorliegenden Erfindung umfasst der Großmanipulator gemäß dem dritten Aspekt mindestens zwei an unterschiedlichen Segmenten angeordnete Drehratensensoren, wobei die Torsion aus einem Vergleich der Messwerte der Drehratensensoren bestimmt wird.

Beispielsweise können die Messwerte eines ersten Drehratensensors, welcher innerhalb des Gelenkarms am nächsten zu dem Drehbock angeordnet ist, mit den Messwerten eines zweiten Drehratensensors, welcher innerhalb des Gelenkarms am nächsten zur Mastspitze angeordnet ist, verglichen werden, um die Torsion des Gelenkarms zwischen den beiden Drehratensensoren zu bestimmen.

Alternativ oder zusätzlich können die Messwerte eines ersten Drehratensensors, welcher an einem ersten Segment angeordnet ist, mit den Messwerten eines zweiten Drehratensensors, welcher an einem innerhalb des Gelenkarms auf das erste Segment folgenden Segment angeordnet ist, verglichen werden, um die Torsion des Gelenkarms zwischen den beiden Drehratensensoren und insbesondere die Torsion des ersten oder zweiten Segments zu bestimmen. Die Drehratensensoren können hierfür beispielsweise jeweils in einem vorderen Bereich der Segmente angeordnet sein.

Alternativ oder zusätzlich kann der Großmanipulator gemäß dem dritten Aspekt mindestens zwei an unterschiedlichen Positionen desselben Segments angeordnete Drehratensensoren umfassen, wobei die Torsion des Segments aus einem Vergleich der Messwerte der Drehratensensoren bestimmt wird. Bevorzugt sind hierfür die Drehratensensoren in einem vorderen und einem hinteren Bereich des Segments angeordnet.

Weiterhin kann mindestens einer der Drehratensensoren, welcher zur Bestimmung der Torsion genutzt wird, am Drehbock und/oder in einem hinteren Bereich des unmittelbar an dem Drehbock angeordneten Segments angeordnet sein, und/oder mindestens einer der Drehratensensoren, welcher zur Bestimmung der Torsion genutzt wird, am letzten Segment des Gelenkarms und insbesondere im Bereich der Mastspitze angeordnet sein.

Bevorzugt weisen die Drehratensensoren, deren Messwerte zur Bestimmung der Torsion genutzt werden, mindestens zwei Sensitivitätsrichtungen auf, insbesondere eine erste horizontale Sensitivitätsrichtung und eine zweite, in einer vertikalen Ebene verlaufende Sensitivitätsrichtung. Hierdurch kann die Torsion durch den Vergleich relativ einfach bestimmt werden.

Jedoch auch unabhängig von der Bestimmung der Torsion weisen die Drehratensensoren, deren Messwerte in die erfindungsgemäße Schwingungsdämpfung eingehen, bevorzugt mindestens zwei Sensitivitätsrichtungen auf, insbesondere eine erste horizontale Sensitivitätsrichtung und eine zweite, in einer vertikalen Ebene verlaufende Sensitivitätsrichtung.

Der dritte Aspekt der vorliegenden Erfindung ist zunächst unabhängig von dem ersten und/oder dem zweiten Aspekt. Beispielsweise können auch andere Sensoren als Drehratensensoren zur Bestimmung der Torsion genutzt und/oder ein anderes Modell zur Beschreibung der Torsion eingesetzt werden.

Bevorzugt wird der dritte Aspekt aber mit dem ersten und/oder dem zweiten Aspekt kombiniert.

Bevorzugte Ausgestaltungen der vorliegenden Erfindung, welche - soweit nichts anderes angegeben ist - zur Weiterbildung jedes der erfindungsgemäßen, bisher beschriebenen Aspekte zum Einsatz kommen können, werden im folgenden beschrieben.

In einer möglichen Ausgestaltung der vorliegenden Erfindung umfasst die Steuerung des Großmanipulators einen Beobachter, welcher den Zustand des Gelenkarms schätzt. Insbesondere kann der Beobachter ein physikalisches Modell des Gelenkarms umfassen und dessen Zustand anhand des Modells und anhand von Messwerten von Sensoren schätzen.

Bevorzugt erfolgt die Schätzung auf Grundlage der Messwerte von Sensoren, wie sie oben im Hinblick auf einen der erfindungsgemäßen Aspekte beschrieben wurden, insbesondere auf Grundlage von mindestens einem Drehwinkelsensor und/oder den Gelenken zugeordneten Sensoren zur mittelbaren oder unmittelbaren Erfassung der Drehwinkel der Gelenke.

Bevorzugt setzt der Beobachter ein physikalisches Modell des Gelenkarmes ein, wie es oben näher beschrieben wurde, insbesondere ein physikalisches Modell gemäß dem zweiten Aspekt.

Bevorzugt schätzt der Beobachter die Stellung und/oder den Schwingungszustand des Gelenkarms.

Wird im Rahmen der vorliegenden Erfindung dabei davon gesprochen, dass ein Zustand bestimmt wird, umfasst dies insbesondere eine Schätzung des Zustands durch einen Beobachter.

Die Schwingungsdämpfung umfasst in einer möglichen Ausgestaltung eine Regelung durch Rückführung mindestens einer anhand eines Messsignals erhaltenen Größe.

In einer möglichen Ausgestaltung der vorliegenden Erfindung umfasst die Schwingungsdämpfung eine Regelung, welche durch Rückführung mindestens einer der folgenden Größen erfolgt: Geschwindigkeit und Position einer oder mehrere der Gelenke, Geschwindigkeiten und Positionen der Biegung und/oder Torsion einer oder mehrere der Segmente.

Bevorzugt werden der oder die Größen, welche durch die Regelung zurückgeführt werden, durch einen Beobachter geschätzt. Insbesondere kann hierfür der Beobachter genutzt werden, welcher oben näher beschrieben wurde.

In einer möglichen Ausgestaltung der vorliegenden Erfindung erfolgt eine Schätzung des Systemzustandes und/oder die Schwingungsdämpfung auf Grundlage einer Linearisierung eines physikalischen Modells erfolgt, und insbesondere auf Grundlage einer Linearisierung des physikalischen Modells gemäß dem zweiten Aspekt der vorliegenden Erfindung. Insbesondere erfolgt die Schätzung durch einen Beobachter und/oder die Regelung, wie sie oben beschrieben wurden, auf Grundlage einer Linearisierung.

Bevorzugt erfolgt die Linearisierung um die Gleichgewichtslage der aktuellen Stellung des Gelenkarms. Die Linearisierung kann durch die Steuerung in Abhängigkeit von der aktuellen Stellung des Gelenkarms vorgenommen werden.

In einer möglichen Ausgestaltung der vorliegenden Erfindung umfasst die Steuerung eine Vorsteuerung, welche aus einem von einem Bediener vorgegebenen Sollwert Ansteuersignale berechnet, durch welche die gewünschte Mastbewegung durchgeführt und eine Schwingungsanregung des Gelenkarms vermindert wird.

Bevorzugt ist die Vorsteuerung so ausgeführt, dass Eigenfrequenzen des Gelenkarms unterdrückt werden. Die Eigenfrequenzen können des Gelenkarms, welche durch die Vorsteuerung berücksichtigt werden, können in Abhängigkeit von der aktuellen Stellung des Gelenkarms bestimmt werden.

In einer möglichen Ausgestaltung der vorliegenden Erfindung umfasst die Steuerung den jeweiligen Gelenken zugeordnete Achsregler, wobei die Steuerung Ansteuersignale für die Sollwinkelgeschwindigkeit der Achsen erzeugt, auf deren Grundlage der dem jeweiligen Gelenk zugeordnete Achsregler Ansteuersignale für den jeweiligen Aktuator erzeugt, wobei die Achsregler bevorzugt auf einer inversen Umlenkkinematik beruhen und/oder eine inverse Nichtlinearität der Hydraulik umfassen.

Die vorliegende Erfindung kann zunächst für beliebige Großmanipulatoren eingesetzt werden. Bevorzugt kommt sie jedoch bei einer Betonpumpe zum Einsatz, insbesondere bei einer Autobetonpumpe.

In einer möglichen Ausgestaltung der vorliegenden Erfindung dient der Gelenkarm daher als Verteilermast, an welchem eine Betonleitung entlang geführt ist, welche von einer Förderpumpe mit Beton beschickt wird.

Die erfindungsgemäße Schwingungsdämpfung dient bevorzugt zumindest der Dämpfung von Eigenschwingungen des Gelenkarms.

Die erfindungsgemäße Schwingungsdämpfung kann jedoch alternativ oder zusätzlich auch zur Dämpfung von Schwingungen dienen, welche durch die Betonförderung induziert werden.

In einer möglichen Ausgestaltung der vorliegenden Erfindung umfasst die Steuerung eine Störgrößenaufschaltung zur Verringerung der durch die Betonförderung induzierten Schwingungen des Verteilermastes.

Bei der Förderpumpe handelt es sich bevorzugt um eine Doppelkolbenpumpe. Eine solche Doppelkolbenpumpe umfasst zwei Kolben, welche im Gegentakt arbeiten, um den Beton zu fördern. Solche Förderpumpen sind bekannt.

Die Dämpfung induzierter Schwingungen durch die Störgrößenaufschaltung gemäß der vorliegenden Erfindung beruht bevorzugt auf einer Ansteuerung der Aktoren des Gelenkarms.

Die Ansteuerung der Förderpumpe erfolgt dagegen bevorzugt unabhängig von der Störgrößenaufschaltung. Insbesondere kann die Störgrößenaufschaltung allein auf einer Ansteuerung der Aktoren des Gelenkarms beruhen.

In einer möglichen ersten Variante der vorliegenden Erfindung erfolgt die Störgrö-ßenaufschaltung auf Grundlage eines physikalischen Modells der Betonförderung, welches die strömungsbedingten Störkräfte der Betonförderung auf den Verteilermast beschreibt.

In einer möglichen Ausführungsform der ersten Variante beschreibt das physikalische Modell Reibungskräfte des Betons an der Innenwand der Betonleitung und/oder Trägheitskräfte aufgrund der Betonstromumlenkung in den Rohrbögen.

Diese beiden Kräfte bestimmen wesentlich die auf den Gelenkarm wirkenden Störkräfte.

In einer möglichen Ausführungsform der vorliegenden Erfindung geht mindestens ein Betriebsparameter der Förderpumpe und/oder Betonförderung in die Störgrö-ßenaufschaltung ein. Hierbei kann es sich beispielsweise um einen oder mehrere der folgenden Betriebsparameter handeln: Betondruck, Pumpfrequenz, Zylindergeschwindigkeit der Zylinder der Förderpumpe und/oder die Zylinderposition der Zylinder der Förderpumpe.

In einer möglichen Ausführungsform der vorliegenden Erfindung berücksichtigt das physikalische Modell der Betonförderung die aktuelle Stellung des Verteilermasts und insbesondere die Knickwinkel der Gelenke.

Bevorzugt erfolgt eine Ermittlung der aktuellen Stellung des Verteilermastes auf Grundlage von den Drehgelenken zugeordneten Sensoren zur mittelbaren oder unmittelbaren Messung des jeweiligen Drehwinkels der Gelenke des Gelenkarms.

Bevorzugt erfolgt die Bestimmung der Störkräfte der Betonförderung auf den Verteilermast ohne eine Messung des Schwingungszustands des Verteilermastes oder der Segmente.

Bevorzugt gehen die Stellung des Verteilermastes und insbesondere die Knickwinkel der Gelenke in die Beschreibung der Betonstromumlenkung durch das physikalische Modell ein. Alternativ oder zusätzlich kann das physikalische Modell den hydrostatischen Druckverlust der Strömung unter Berücksichtigung der aktuellen Stellung des Verteilermasts berücksichtigen.

In einer möglichen Ausführungsform der vorliegenden Erfindung wird mindestens eine in die Modellierung durch das physikalische Modell eingehende Stoffeigenschaft des gepumpten Fluids aus Betriebsparametern der Förderpumpe und/oder der Betonförderung bestimmt wird. Hierdurch kann die Genauigkeit des Modells verbessert werden.

Bevorzugt wird zumindest die Viskosität des gepumpten Fluids bestimmt, insbesondere aus dem Betondruck und der Strömungsgeschwindigkeit des Betons.

Die Dichte des gepumpten Fluids kann durch den statischen Betondruck ermittelt werden. Alternativ kann für die Dichte des gepumpten Fluids dagegen auf einen abgespeicherten Mittelwert für die Dichte von Beton zurückgegriffen werden.

In einer möglichen Ausführungsform der vorliegenden Erfindung beruht die Störgrößenaufschaltung weiterhin auf einem physikalischen Modell des Verteilermastes, welches mit dem physikalischen Modell der Betonförderung gekoppelt ist, um den Einfluss der durch das physikalische Modell der Betonförderung bestimmten Störkräfte auf den gesamten Verteilermast zu bestimmen.

Bevorzugt berücksichtigt das hierfür eingesetzte physikalische Modell des Verteilermastes die elastische Verformung mindestens eines der Segmente.

Insbesondere kann dabei das ein physikalisches Modell des Verteilermastes eingesetzt werden, wie es oben im Hinblick auf die Schwingungsdämpfung näher beschrieben wurde.

Gemäß der vorliegenden Erfindung erfolgt die Verringerung der durch die Betonförderung induzierten Schwingungen des Verteilermastes durch die Störgrö-ßenaufschaltung durch eine Ansteuerung der Aktoren des Gelenkarms.

In einer möglichen Ausführungsform der vorliegenden Erfindung erfolgt die Störgrößenaufschaltung als eine Vorsteuerung ohne eine Rückführung des dynamischen Zustands des Verteilermastes. Dies vereinfacht die Ansteuerung.

Bevorzugt erfolgt die Vorsteuerung auf Grundlage einer Regelung eines virtuellen Modells des Verteilermastes. Bevorzugt regelt die Störgrößenaufschaltung das virtuelle Modell des Verteilermastes, welches im Rahmen der Bestimmung der Störkräfte mit dem Modell der Betonförderung gekoppelt ist. Insbesondere kann diese Regelung so erfolgen, dass der Einfluss der Störkräfte an mindestens einer Stelle des Gelenkarms ausgeglichen wird.

Bevorzugt handelt es sich bei dem virtuellen Modell des Verteilermastes, welches geregelt wird, um ein physikalisches Modell, wie es oben im Rahmen der Schwingungsdämpfung näher beschrieben wurde.

In einer möglichen Ausführungsform der vorliegenden Erfindung steuert die Störgrößenaufschaltung die Aktoren des Gelenkarms so an, dass der Einfluss der Störkräfte auf die Spitze des Verteilermastes verringert und bevorzugt eliminiert wird.

In einer möglichen zweiten Variante der vorliegenden Erfindung, welche mit der ersten Variante kombiniert werden kann, berücksichtigt die Störgrößenaufschaltung den Betondruck, wobei sie den Betondruck am Eingang der Betonleitung auf Grundlage von Betriebsparametern der Förderpumpe bestimmt.

Die indirekte Bestimmung des Betondrucks auf Grundlage von Betriebsparametern der Förderpumpe hat den erheblichen Vorteil, dass auf extrem verschleißanfällige Drucksensoren an der Betonleitung verzichtet werden kann.

Bevorzugt erfolgt die Bestimmung des Betondrucks am Eingang der Betonleitung auf Grundlage des Hydraulikdrucks der Förderzylinder der Förderpumpe und dem Kolbenflächenverhältnis der Förderpumpe. Der Betondruck kann hierdurch anhand von einem im Hydrauliksystem der Förderpumpe zuverlässig bestimmbaren Messwert bestimmt werden.

In einer möglichen Ausführungsform der vorliegenden Erfindung berücksichtigt die Störgrößenaufschaltung die Frequenz der Förderpumpe und/oder die Position und/oder Geschwindigkeit der Förderkolben der Förderpumpe. Auch hier handelt es sich um einfach zugängliche Betriebsparameter der Förderpumpe, welche entweder durch Messung, oder aus der Ansteuerung der Förderpumpe ermittelbar sind, und aus welchen Betriebsgrößen der Betonförderung ermittelbar sind.

Insbesondere kann die Störgrößenaufschaltung die Strömungsgeschwindigkeit des Betons in der Betonleitung aus der Geschwindigkeit der Förderkolben der Förderpumpe ermitteln. Dieses Merkmal der vorliegenden Erfindung kann auch unabhängig von der ersten und der zweiten Variante zum Einsatz kommen.

In einer möglichen dritten Variante der vorliegenden Erfindung schätzt die Störgrö-ßenaufschaltung die Störkräfte dagegen aus Messwerten der Stellung und/oder des Schwingungszustands des Verteilermastes.

Dies hat den Vorteil, dass keine Betriebsgrößen der Betonförderung benötigt werden, welche durch aufwendige Messung ermittelt werden müssten. Vielmehr können die zur Regelung des Gelenkarms ohnehin vorhandenen Sensoren, welche die Stellung und/oder des Schwingungszustands des Verteilermastes beschreiben, auch für die Störgrößenaufschaltung genutzt werden.

In einer möglichen Ausführungsform der vorliegenden Erfindung beruht die Störgrößenaufschaltung auf einem modalen Modell, welches die Schwingungsform der Störkräfte beschreibt. Ein solches Vorgehen hat gegenüber einem physikalisch motivierten Ansatz den Vorteil, dass sich die Störgrößenaufschaltung automatisch an die Stellung des Gelenkarms adaptiert.

Bevorzugt setzt sich das modale Modell aus einer Grundfrequenz und einer oder mehreren Vielfachen der Grundfrequenz zusammen.

Alternativ oder zusätzlich ist vorgesehen, dass die Pumpfrequenz der Förderpumpe als Grundfrequenz in das modale Modell eingeht.

In einer möglichen Ausführungsform der vorliegenden Erfindung bestimmt die Störgrößenaufschaltung den Anfangszustand des modalen Modells aus den Messwerten der Stellung und/oder des Schwingungszustands des Verteilermastes.

Dies kann insbesondere über einen Beobachter erfolgen, welcher den durch die Störkräfte erzeugten Schwingungszustand schätzt, insbesondere durch Schätzung der Phasenlage und Amplitude der Moden des modalen Modells.

In einer möglichen Ausführungsform der vorliegenden Erfindung erfolgt die Störgrößenaufschaltung weiterhin auf Grundlage eines physikalischen Modells des Verteilermastes, durch welches der Einfluss der Störkräfte auf den Schwingungszustand des Verteilermastes beschrieben wird.

Bevorzugt berücksichtigt das physikalische Modell des Verteilermastes die elastische Verformung mindestens eines der Segmente und bevorzugt mehrerer, weiter bevorzugt aller Segmente des Gelenkarms.

Bevorzugt kommt hierbei ein physikalisches Modell des Verteilermastes zum Einsatz, wie es oben im Hinblick auf die Schwingungsdämpfung näher beschrieben wurde.

In einer möglichen Ausführungsform der vorliegenden Erfindung steuert die Störgrößenaufschaltung die Aktoren des Verteilermastes auf Grundlage der geschätzten Störkräfte an.

Bevorzugt steuert die Störgrößenaufschaltung die Aktoren so an, dass der Einfluss der Störkräfte auf einen Punkt des Verteilermastes, insbesondere die Spitze des Verteilermastes, verringert und bevorzugt eliminiert wird.

In einer möglichen Ausführungsform der vorliegenden Erfindung ist vorgesehen, dass die Steuerung den Systemzustand auf Grundlage eines modalen Modells der Störkräfte und einem physikalischen Modell des Verteilermastes schätzt. Insbesondere wird hierfür das modale Model eingesetzt, welches oben näher beschrieben wurde. Weiterhin kann das modale Modell so mit dem physikalischen Modell gekoppelt sein, dass durch das physikalische Modell der Einfluss der Störkräfte auf den Schwingungszustand des Verteilermastes beschrieben wird.

In einer möglichen Ausführungsform der vorliegenden Erfindung geht mindestens ein Betriebsparameter der Förderpumpe und/oder der Betonförderung in die Störgrößenaufschaltung ein. Insbesondere geht die Pumpfrequenz der Förderpumpe in die Störgrößenaufschaltung ein.

Bevorzugt bestimmt die Störgrößenaufschaltung hierfür die Pumpfrequenz der Förderpumpe aus den Ansteuerparametern und/oder Ansteuersignalen für die Förderpumpe.

In einer möglichen Ausgestaltung der Erfindung stellt die Pumpfrequenz der Förderpumpe den einzigen Betriebsparameter der Förderpumpe und/oder der Betonförderung dar, welche in die Störgrößenaufschaltung eingeht.

In einer möglichen Ausführungsform der vorliegenden Erfindung erfolgt die Schätzung der Störkräfte auf Grundlage der Signale mindestens eines Sensors, dessen Signale auch durch die Regelung und/oder Schwingungsdämpfung genutzt werden.

Bevorzugt werden mehrere Sensoren, welche durch die Störgrößenaufschaltung zur Bestimmung der Stellung und/oder des Schwingungszustands des Verteilermastes genutzt werden, um die Störkräfte zu schätzen, auch von der Regelung und/oder Schwingungsdämpfung genutzt.

Weiterhin bevorzugt nutzen die Störgrößenaufschaltung und die Regelung und/oder Schwingungsdämpfung die gleichen Sensoren.

In einer möglichen Ausführungsform der vorliegenden Erfindung beruhen die Störgrößenaufschaltung und die Regelung und/oder Schwingungsdämpfung auf denselben Werten für den Zustand des Gelenkarms, insbesondere für die Stellung und/oder den Schwingungszustand des Gelenkarms.

Insbesondere ist ein Beobachter vorgesehen, welcher den Zustand des Gelenkarms, insbesondere die Stellung und/oder den Schwingungszustand des Gelenkarms schätzt, und dessen Ausgangsgrößen sowohl von der Störgrößenaufschaltung als auch von der Regelung und/oder Schwingungsdämpfung genutzt werden.

In einer möglichen Ausgestaltung der vorliegenden Erfindung umfasst der Großmanipulator einen Gelenkarm, welcher einen um eine vertikale Achse drehbaren Drehbock und mindestens zwei mittels Gelenken um horizontale Achsen verschwenkbare Segmente aufweist, wobei der Drehbock über einen Aktuator um die vertikale Achse verfahrbar ist und die Segmente über Aktuatoren um die horizontalen Achsen verschwenkbar sind. Weiter bevorzugt umfasst der Gelenkarm mindestens drei und weiter bevorzugt mindestens vier Segmente. Bevorzugt steuert die Steuerung und insbesondere die Schwingungsdämpfung alle Aktoren der Segmente und/oder des Drehbocks an.

In einer möglichen Ausgestaltung der vorliegenden Erfindung erfolgt zumindest eine vertikale Schwingungsdämpfung. Hierfür steuert die Schwingungsdämpfung die Aktoren, über welche die Segmente des Gelenkarms um ihre horizontalen Drehachsen gedreht werden, entsprechend an.

In einer möglichen Ausgestaltung der vorliegenden Erfindung erfolgt zumindest eine horizontale Schwingungsdämpfung. Hierfür steuert die Schwingungsdämpfung den Aktor des Drehbocks entsprechend an.

Bei den Aktoren handelt es sich bevorzugt um hydraulische Aktoren. Die hydraulischen Aktoren werden bevorzugt über eine Hydraulikpumpe angetrieben, welche über den Fahrmotor der Autobetonpumpe angetrieben wird.

Als Aktoren zum Verschwenken der Segmente werden bevorzugt Hydraulikzylinder eingesetzt.

Als Aktor zum Drehen des Drehbocks wird bevorzugt ein Hydraulikmotor eingesetzt.

Bevorzugt können die Segmente des Gelenkarms über die Gelenke in eine Transportstellung zusammengeklappt werden, wobei bevorzugt die einzelnen Segmente in der Transportstellung im Wesentlichen parallel verlaufen.

In einer möglichen Ausgestaltung der vorliegenden Erfindung umfasst die Steuerung eine Geometriesteuerung, welche anhand von Vorgaben eines Benutzers, welche bevorzugt über Handhebel erfolgen, und/oder anhand einer vorgegebenen Trajektorie der Mastspitze, welche bevorzugt automatisch erzeugt wird, die Aktoren der Gelenke des Gelenkarms zur Erzeugung einer entsprechenden Bewegung der Mastspitze ansteuert.

Die vorliegende Erfindung umfasst weiterhin eine Steuerung gemäß Anspruch 14 für einen Großmanipulator, wie er oben beschrieben wurde.

Die Steuerung umfasst bevorzugt einen Mikroprozessor und einen Speicher, in welchem eine Steuersoftware abgespeichert ist, welche bei einer Ausführung durch den Mikroprozessor den oben beschriebenen Aufbau und/oder die oben beschriebene Funktionsweise der erfindungsgemäßen Steuerung implementiert. Die Steuerung weist weiterhin einen oder mehrere Eingänge auf, über welche sie mit Sensoren, insbesondere den oben beschriebenen Sensoren in Verbindung steht, und/oder einen oder mehrere Ausgänge, über welche sie die oben beschriebenen Aktoren ansteuert.

Die erfindungsgemäße Schwingungsdämpfung erfolgt bevorzugt automatisch durch die Steuerung des Großmanipulators.

Weiterhin umfasst die vorliegende Erfindung eine Steuersoftware gemäß Anspruch 13 für einen Großmanipulator, wie er oben beschrieben wurde. Die Steuersoftware implementiert bei ihrer Ausführung die erfindungsgemäße Steuerung. Die Steuersoftware kann auf einem Speicher abgespeichert sein und/oder ein Computerprogrammprodukt darstellen.

Die vorliegende Erfindung umfasst weiterhin eine Betonpumpe mit einem Großmanipulator, wie er oben beschrieben wurde, wobei der Gelenkarm als Verteilermast dient, an welchem eine Betonleitung entlang geführt ist. Bei der Betonpumpe handelt es sich bevorzugt um eine Autobetonpumpe. Die Betonpumpe umfasst bevorzugt ein Fahrwerk, über welche sie verfahrbar ist, und die Förderpumpe.

Die vorliegende Erfindung umfasst weiterhin ein Verfahren gemäß Anspruch 16 zur Ansteuerung eines Großmanipulators und/oder einer Betonpumpe, wie sie oben beschrieben wurden.

Gemäß einem ersten Aspekt der vorliegenden Erfindung ist bei dem erfindungsgemäßen Verfahren vorgesehen, dass die Messsignale mindestens eines Drehratensensors in die Schwingungsdämpfung und die Messsignale von den Drehgelenken des Großmanipulators zugeordneten Sensoren zur mittelbaren oder unmittelbaren Messung des jeweiligen Drehwinkels der Gelenke des Gelenkarms in die Steuerung eingehen, wobei die Schwingungsdämpfung auf Grundlage der Messwerte des mindestens einen Drehratensensors aus den Schwingungen der einzelnen Segmente einen Schwingungszustand des gesamten Gelenkarms bestimmt und bevorzugt ohne die Verwendung geodätischer Sensoren und/oder Deformationssensoren erfolgt.

Gemäß einem zweiten Aspekt der vorliegenden Erfindung ist bei dem erfindungsgemäßen Verfahren vorgesehen, dass die Schwingungsdämpfung unter Verwendung eines physikalischen Modells des Gelenkarms erfolgt, bei welchem die Flexibilität mindestens eines Segmentes durch ein innerhalb dieses Segmentes angeordnetes virtuelles Gelenk beschrieben wird.

Gemäß einem dritten Aspekt der vorliegenden Erfindung ist bei dem erfindungsgemäßen Verfahren vorgesehen, dass die Schwingungsdämpfung durch Ansteuerung des Aktors des Drehbocks erfolgt, wobei die Schwingungsdämpfung die Torsion mindestens eines Segmentes und/oder des Gelenkarms berücksichtigt und eine Torsionsschwingung des Gelenkarms dämpft.

Die vorliegende Erfindung wird nun anhand von Ausführungsbeispielen und Zeichnungen näher beschrieben.

Dabei zeigen:

Fig. 1    ein Ausführungsbeispiel eines erfindungsgemäßen Großmanipulators und einer erfindungsgemäßen Autobetonpumpe,

Fig. 2    eine schematische Darstellung eines Ausführungsbeispiels einer erfindungsgemäßen Steuerung mit einer Schwingungsdämpfung und einer Störgrößenaufschaltung,

Fig. 3    eine schematische Darstellung einer Vorsteuerung, wie sie in einer erfindungsgemäßen Steuerung zum Einsatz kommen kann,

Fig. 4    eine schematische Darstellung eines Ausführungsbeispiels einer erfindungsgemäßen Steuerung mit einer Schwingungsdämpfung,

Fig. 5    eine schematische Darstellung eines Achsreglers, wie er in einer erfindungsgemäßen Steuerung zum Einsatz kommen kann,

Fig. 6    eine schematische Darstellung der durch die Betonförderung auf den Gelenkarm wirkenden Störkräfte,

Fig. 7    eine schematische Darstellung eines Ausführungsbeispiels einer erfindungsgemäßen Steuerung mit einer Störgrößenaufschaltung,

Fig. 8    eine schematische Darstellung eines weiteren Ausführungsbeispiels einer erfindungsgemäßen Steuerung mit einer Störgrößenaufschaltung, welche auf einem physikalischen Modell der Betonförderung beruht,

Fig. 9    eine schematische Darstellung eines weiteren Ausführungsbeispiels einer erfindungsgemäßen Steuerung mit einer Störgrößenaufschaltung, welche auf einer Schätzung der Störkräfte aus Messwerten der Stellung und/oder des Schwingungszustands des Verteilermastes beruht.

## 0. Einleitung

Neue Konstruktionsmethoden, Werkstoffe und elektronische Systeme haben dazu geführt, dass sich Betonpumpen in den letzten Jahrzehnten beständig weiter entwickelt haben. Der Einsatz mehrgliedriger Gelenkarme mit immer längeren Segmenten ermöglicht eine verbesserte Erreichbarkeit von schwer zugänglichen Bereichen. Die Erhöhung der Anzahl und der Länge der Segmente vergrößert jedoch auch das Gewicht und die Abmessungen des Fahrzeugs. Die Folge sind Einschränkungen in der Straßenfahrt, der Handhabbarkeit und der Funktionsfähigkeit der Betonpumpe.

Ein spezielles Phänomen von Großmanipulatoren ist die Schwingungsfähigkeit des Verteilermasts. Die Schwingungen erschweren die Steuerung des Masts durch den Bediener und das Verteilen des Betons durch den Endschlauchführer. Die Schwingfähigkeit ist mit der Schlankheit und der Trägheit der Segmente und den elastischen Eigenschaften des Materials verknüpft.

Die Schwingungsanregung entsteht durch das Verfahren des Knickmasts und die Betonförderung. Die typischerweise eingesetzte Doppelkolbenpumpe der Betonförderung überträgt impulsartige Störkräfte auf den Verteilermast und verursacht damit eine kontinuierliche Schwingungsanregung. Je nach Mastposition und Förderfrequenz ist damit auch eine Anregung nahe der Eigenfrequenzen des Masts möglich.

Die Kombination von Verfahrbewegung und Betonförderung setzt den Verteilermast im normalen Betrieb einer kontinuierlichen Schwingungsanregung aus. Dies hat Auswirkungen auf die Maschinenlebensdauer und die Sicherheit für den Bediener.

Das Ziel der vorliegenden Erfindung ist eine Schwingungsdämpfung des Verteilermasts zur Verbesserung der Handhabbarkeit und Funktionsfähigkeit der Betonpumpe.

## 1. Stand der Technik

Die EP 2 103 760 B1 (Cifa) schlägt eine modellbasierte Schwingungsdämpfung unter Nutzung eines modalen Modells vor. Der Regelalgorithmus schätzt den Zustand des Systems mithilfe eines Beobachters und führt das geschätzte Signal über Regelverstärkungen zurück. Die Verstärkungen werden in Abhängigkeit der Mastposition aus einer Liste abgerufen und interpoliert. Das Verfahren basiert auf einem modalen Modell, das durch Modaltransformation und anschließender Modellreduktion auf die ersten Schwingungsmoden gewonnen wird. Die einzelnen Zustände des Modells sind somit modale Koordinaten und besitzen keine physikalische Interpretation. Das Verfahren hat den Nachteil, dass neben den Regelverstärkungen auch das reduzierte, modale Modell des Beobachters von der aktuellen Mastposition abhängig ist. Das modale Modell muss deshalb für jede Mastposition neu generiert werden oder ist nur für bestimmte Mastpositionen gültig. Aufgrund der großen Anzahl an möglichen Mastpositionen stellt dies eine Beschränkung für die Einsatzfähigkeit der Schwingungsdämpfung dar. Die im Folgenden vorgeschlagene Schwingungsdämpfung umgeht diese Probleme durch eine andere Art der Modellierung. Die Modellreduktion ist physikalisch motiviert und führt auf physikalisch interpretierbare, elastische Koordinaten. Zudem unterscheidet sich die verwendete Sensorkombination zur Schwingungsdämpfung.

Die WO 2014165889 A1 (TTControl) stellt eine Schwingungsdämpfung basierend auf der Rückführung von Positions- und Deformationssignalen der Mastsegmente vor. Die Position wird dabei mit einer inertialen Messeinheit und die Deformation durch Dehnmessstreifen erfasst. Die inertial Messeinheit umfasst einen Drehratensensor und einen Beschleunigungssensor, die nur in Kombination und für die Positionsschätzung eingesetzt werden (siehe Anspruch 2). Das Verfahren hat den Vorteil, dass die Schwingung der Segmente unabhängig von der Verfahrbewegung erfasst wird. Damit entfällt die zusätzliche Signalverarbeitung zur Trennung von Verfahrbewegung und überlagerter struktureller Schwingung. Der Einsatz von Dehnmessstreifen hat jedoch den Nachteil, dass die Montage aufwendig ist und an hoch belasteten Stellen des Segments erfolgen muss. Zudem ist der Sensor sehr temperatursensitiv und erfordert einen hohen Kalibrationsaufwand. Die im Folgenden vorgeschlagene Schwingungsdämpfung umgeht diese Nachteile durch die Wahl eines Drehratensensors zur Detektion von Schwingungen im Verteilermast.

Die WO 2016 131977 A1 (Schwing) nutzt inertiale Messeinheiten zur Lageregelung der Mastspitze. Die Messeinheiten sind auf den Segmenten jeweils in der Balkenmitte angebracht. An der Mastspitze ist ein zusätzlicher Sensor vorhanden. Die Beschleunigungs- und Drehratensignale der Sensoren werden über einen Starrkörperansatz fusioniert und schätzen die Lage der Mastspitze. Zur Verbesserung der Lageschätzung wird das Beschleunigungssignal aus dem Sensor an der Mastspitze zweifach integriert und mit der bestehenden Schätzung fusioniert. Eine absolute Lagebestimmung ist aufgrund des verwendeten Starrkörperansatzes und der Doppelintegration nicht möglich. Stattdessen werden die dynamischen Anteile der Mastspitzenposition über ein Hochpassfilter berechnet und mit einem PID-Regler zurückgeführt. Eine unterlagerte Positionsregelung auf Gelenkebene verhindert dabei Drifteffekte der Mastspitze. Der Fusionierungsalgorithmus umfasst ausschließlich die Rekonstruktion der Lage der Mastspitze. Aufgrund der Positionierung der inertialen Messeinheiten und des verwendeten Starrkörperansatzes wird dabei lediglich die Neigung der Segmente und nicht der Schwingungszustand des Verteilermasts geschätzt. Dies unterscheidet sich von dem im Folgenden vorgestellten modellbasierten Ansatz zur Schätzung und Regelung des Schwingungszustands des Verteilermasts. Dabei wird der Schwingungszustand des gesamten Masts berücksichtigt. Im Gegensatz zur Lageregelung der Mastspitze lässt sich somit die Anzahl der verwenden Sensoren reduzieren und auf den Einsatz von Drehratensensoren beschränken.

Die EP 1 537 282 B1 (Putzmeister) schlägt geodätische Winkelsensoren zur Positionsbestimmung und Schwingungsdämpfung des Verteilermasts vor. Die Sensoren sind auf den Segmenten angebracht und liefern die jeweilige absolute Neigung. Die Signale werden unter Berücksichtigung der Kinematik in einen niederfrequenten Anteil für eine Koordinatensteuerung und einen hochfrequenten Anteil zur Schwingungsdämpfung aufgeteilt. Die typischerweise eingesetzten Neigungssoren reagieren empfindlich auf translatorische Beschleunigungsspitzen. Die Anwendung zur Schwingungsdämpfung unter Berücksichtigung von Verfahrbewegung und Betonförderung ist somit stark limitiert.

Die EP 2 778 466 A1 stellt eine Schwingungsdämpfung in horizontalen Ebene vor..

Die EP 1 122 380 B1 (Putzmeister) schlägt eine Steuereinrichtung zur periodischen Variation oder Modulation der Pumpfrequenz vor. Die Variation oder Modulation der Pumpfrequenz verhindert, dass Anregungsfrequenzen in der Nähe der Eigenfrequenz des Masts auftreten. Das Resultat ist eine reduzierte Schwingungsanregung des Verteilermasts. Das Verfahren verändert die Betonförderung, um die Schwingungen im Verteilermast zu dämpfen. Dies unterscheidet sich von der nachfolgend dargestellten Störgrößenaufschaltung, welche die Aktorik des Verteilermasts nutzt und die Betonförderung unbeeinflusst lässt.

Die EP 1 537 282 B1 (Putzmeister) benennt einen Störgrößenregler zur Reduktion von Schwingungen im Verteilermast. Das Verfahren ist jedoch keine Störgrößenaufschaltung, da nicht eine Störgröße, sondern eine Messgröße des Verteilermasts zur Schwingungsdämpfung verwendet wird. Die Messgröße ist der dynamische Anteil der Positionserfassung des Masts. Sie wird durch einen Regler verstärkt und auf die Aktorik des Verteilermasts zurückgeführt. Das Verfahren stellt somit eine klassische, rückführungsbasierte Schwingungsdämpfung und keine Störgrößenaufschaltung dar.

DE 101 01 570 B4 (Schwing) beschreibt eine Störgrößenaufschaltung kombiniert mit einer rückführungsbasierten Schwingungsdämpfung nach dem Prinzip des virtuellen Feder-Dämpfer-Elements. Die gemessene Störgröße ist von der Betonförderung abhängig - es findet jedoch keine explizite, modellbasierte Umrechnung in die Störkräfte des Verteilermasts statt. Das vorgestellte Verfahren ist außerdem dezentral für jedes Gelenk angesetzt. Der Einfluss der Störkräfte auf den gesamten Verteilermast wird somit nicht berücksichtigt. Die vorgeschlagene Sensorik zur Druckmessung des Betonstroms in der Förderleitung ist praktisch nicht einsetzbar, da sie teuer und im Betrieb starkem Verschleiß ausgesetzt ist.

## 2. Aufbau des Ausführungsbeispiels in Form einer Autobetonpumpe

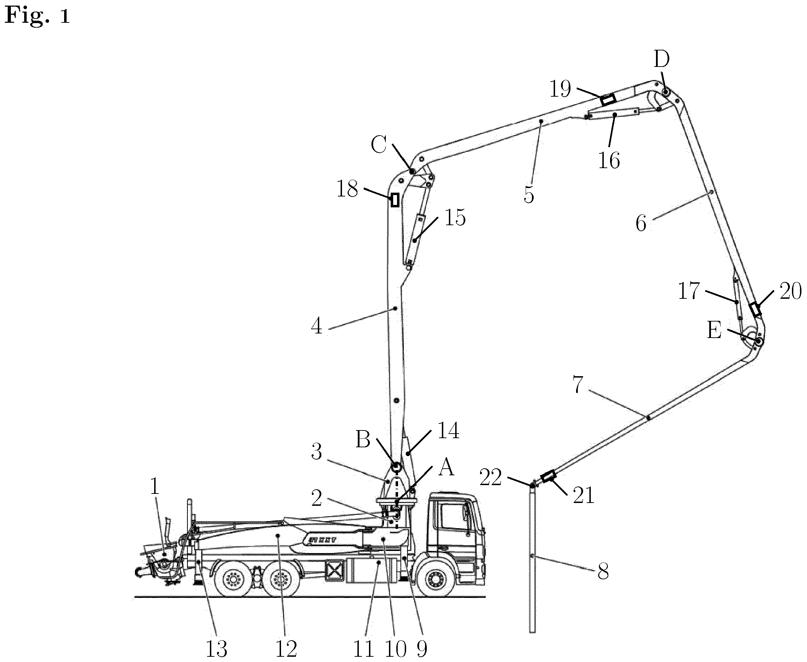

In Fig. 1 werden die relevanten Elemente der Autobetonpumpe aufgezeigt. Diese weist einen Unterwagen mit einem Fahrgestell mit mehreren bereiften Achsen auf, durch welches die Autobetonpumpe auf der Straße verfahrbar ist. An dem Unterwagen sind vordere und hintere Abstützzylinder 9 und 10 vorgesehen, welche an ausklappbaren und/oder austeleskopierbaren Streben 10 und 12 angeordnet sind. Weiterhin ist ein Verteilergetriebe 11 dargestellt.

Der Unterwagen trägt hinten eine Pumpengruppe 1 und über einen Mastblock 2 einen Gelenkarm, an welchem eine nicht dargestellte Förderleitung entlang geführt ist.

Der Gelenkarm besteht aus einem Drehbock 3 und vier Segmenten 4 bis 7 (beliebige Anzahl an Segmente möglich), die über Gelenke A bis E verkoppelt sind. Gelenk A auf dem Fahrzeug ermöglicht die Drehung des Drehbocks 3 um die Hochachse, Gelenke B bis E die Verschwenkung der Segemente 4 bis 7 um horizontale Kippachsen. Die Aktorik der Betonpumpe besteht aus Hydraulikzylindern 14 bis 17 an den jeweiligen Gelenken B bis E und einem Hydraulikmotor für das Drehgelenk A des Drehbocks. Die Hydraulikzylinder 14 bis 17 ermöglichen die Bewegung des Verteilermasts in der vertikalen Ebene. Der Hydraulikmotor dreht den gesamten Mast um die Hochachse. Die Mastspitze 22 (TCP) ist die Spitze des Verteilermasts.

Am Verteilermast ist eine Förderleitung angebracht, die Beton zur Mastspitze 22 befördert. Von dort wird der Beton über einen Schlauchabschnitt 8 zu einem Bediener geleitet. Der erforderliche Förderdruck wird dabei von einer Doppelkolbenpumpe der Pumpeneinheit 1 erzeugt.

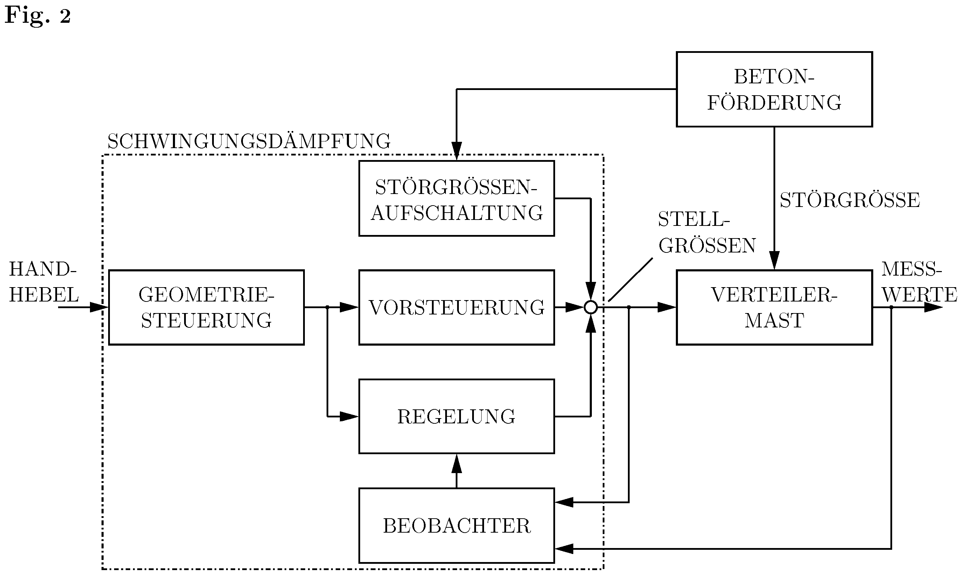

Der geplante Aufbau der Schwingungsdämpfung gliedert sich in die in Fig. 2 dargestellten Untersysteme: Geometriesteuerung, Vorsteuerung, Regelung (mit Beobachter) und Störgrößenaufschaltung.

Für jedes Untersystem wird nachfolgend auf den Aufbau und die Funktionsweise eingegangen und charakteristische Merkmale dargelegt.

## 3. Geometriesteuerung (TCP-Steuerung)

Die Geometriesteuerung dient der Erzeugung von Bewegungsbahnen für den Verteilermast. Die Bewegungsbahnen sind dabei eine Zeitfunktion für Position, Geschwindigkeit, Beschleunigung und/oder Ruck der Gelenkachsen des Verteilermasts. Sie werden in der Vorsteuerung an die Dynamik des Systems angepasst und der Regelung als Sollwert vorgegeben.

## 4. Vorsteuerung

### 4.1 Funktion

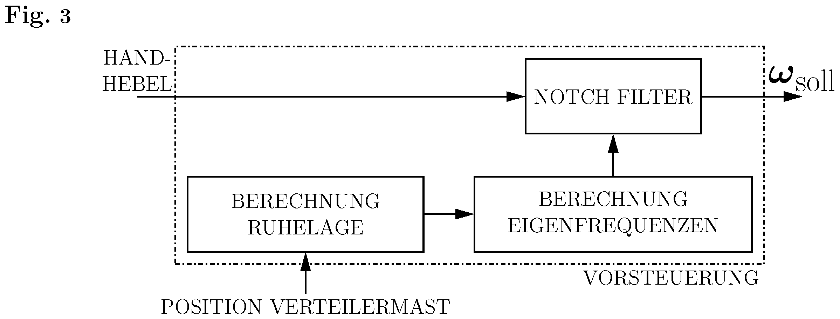

Die Vorsteuerung gemäß Fig. 3 dient dazu, ein schnelles Verfahren des Verteilermasts zu ermöglichen, ohne die Eigenfrequenzen anzuregen.

- Messung der Position des Verteilermasts.

- Bestimmung der (ersten) Eigenfrequenzen und Dämpfung des Verteilermasts in der jeweiligen Mastposition (Ruhelage) in der horizontalen und vertikalen Ebene.

- Filterung der Sollwertsignale mit Eigenfrequenzen (Notch-Filter, Input-Shaping).

- Vorsteuerung wirkt auf jeden vertikalen und horizontalen Aktor.

### 4.2 Sensorik

- Position des Verteilermasts
- Drehgeber für den Drehwinkel um die Hochachse

### 4.3 Aktorik

- Hydraulikzylinder (vertikale Ebene)
- Hydraulikmotor (horizontale Ebene)

## 5. Regelung

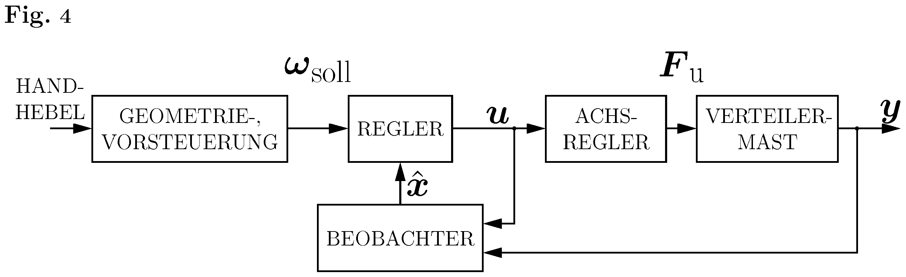

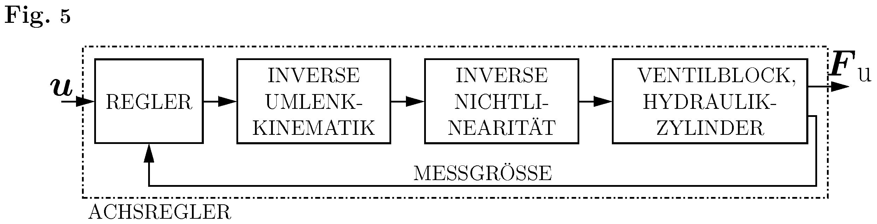

Die Regelung, welche in Fig. 4 nochmals wiedergegeben ist, untergliedert sich in zwei Teile: die Achsregelung (Fig. 5) und die Regelung zur Dämpfung der Schwingungen und Positionsregelung mit dem Regler und dem Beobachter.

### 5.1 Achsregler

Der Achsregler gemäß Fig. 5 dient der Überführung der Sollwinkelgeschwindigkeit des Gelenkes in die reale Aktorgeschwindigkeit:

- Das Übertragungsverhalten des Hydrauliksystems von Ansteuerung bis Geschwindigkeit des Aktors weist ein nichtlineares Verhalten auf.
- Die Achsregelung kompensiert die Nichtlinearitäten der Hydraulik und der Umlenkkinematik.
- Der Regelalgorithmus besteht aus den invertierten statischen Kennlinien der Hydraulik und Umlenkkinematik. Eventuell ist eine Rückführung des Drucks bzw. der Zylinderposition oder -geschwindigkeit vorgesehen.

- Die Achsregelung ist dezentral an jedem Gelenk eingesetzt und stellt die unterste Ebene der gesamten Schwingungsdämpfung dar.

In ihrer Funktion zur Überführung der Sollgeschwindigkeit in die reale Aktorgeschwindigkeit wird die Achsregelung für alle weiteren Steuerungs- und Regelungskonzepte implizit vorausgesetzt.

**5.2 Schwingungsdämpfung basierend auf Drehratensensoren**

**5.2.1 Aufbau Schwingungsdämpfung**

Das Verfahren umfasst eine aktive Schwingungsdämpfung zur Reduktion von Schwingungen im Verteilermast. Es wird dabei zwischen der Sollbewegungen der Segmente durch den Bediener und den Schwingungen angeregt durch die Verfahrbewegung unterschieden. Die Schwingungsdämpfung berücksichtigt die gewollte Sollbewegung und dämpft nur die entstehenden strukturellen Schwingungen. Die Schwingungen aufgrund der Betonförderung werden ebenfalls reduziert.

Das Ziel der Schwingungsdämpfung ist die Reduktion von Schwingungen im gesamten Verteilermast. Zu diesem Zweck wird der Schwingungszustand des gesamten Arms aus den Schwingungen der einzelnen Segmente geschätzt. Der Verteilermast weist in Abhängigkeit der Position und Neigung der Segmente variable Eigenfrequenzen auf. Die Schwingungsdämpfung berücksichtigt diese Variabilität der Eigenfrequenzen in Abhängigkeit der Maststellung. Die ersten Eigenfrequenzen stellen den größten Einfluss auf das Schwingverhalten dar.

**5.2.2 Sensorik**

Der Schwingungszustand des Verteilermasts wird durch Drehratensensoren 18 bis 21 erfasst. Die Sensoren sind auf einem oder mehreren Segmenten 4 bis 7 angebracht und messen die Drehrate um die Gelenkachsen. Der Vorteil dieser Sensoren zur Schwingungserfassung liegt darin, dass sie im Gegensatz zu üblicher Sensorik (z. B. Dehnmessstreifen) einfach montiert werden können. Der Sensor kann an allen Außen- und Innenseiten des Segments angebracht werden. Die MEMSbasierten Drehratensensoren sind außerdem kostengünstig, robust und wartungsarm.

Der Drehratensensor 18 bis 21 wird im vorderen Bereich des jeweiligen Segments 4 bis 7 montiert, um die strukturellen Schwingungen optimal zu erfassen. Durch die serielle Kinematik des Manipulators enthält die gemessene Drehrate eines Segments auch die Schwingung des vorhergehenden Segments. Dieser Umstand wird beim Regelungsentwurf berücksichtigt werden.

Die Position des Verteilermasts wird eine direkte oder indirekte Messung der relativen Gelenkwinkel zwischen den Segmenten bestimmt. Beispielsweise kann als Messanordnung eine Erfassung der relativen Gelenkwinkel über Drehwinkelgeber erfolgen.

**5.3.3 Modellierung**

Der Regelungsentwurf basiert auf einem mathematischen Modell des Verteilermasts. Zu diesem Zweck wird das mechanische System durch ein dynamisches Modell abgebildet.

Der Verteilermast wird durch ein Starrkörpermodell mit aktuierten Gelenken B bis E modelliert. Zusätzliche virtuelle Gelenke berücksichtigen dabei die Flexibilität in den Segmenten. Für jedes Segment wird ein zusätzliches virtuelles Gelenk mit Feder- und Dämpferelementen eingeführt. Die Feder- und Dämpfungskonstanten werden so gewählt, dass die Durchbiegung und die erste Eigenfrequenz des realen Segments erhalten bleiben. Das Modell des Verteilermasts setzt sich aus mehreren Segmenten zusammen. Die Steifigkeit der Gesamtstruktur ergibt sich damit sich aus der Steifigkeit der einzelnen Segmente. Da sich die Gesamtstruktur aus mehreren Segmenten zusammensetzt, werden auch höhere Eigenfrequenzen wiedergegeben.

Diese Art der Modellierung stellt eine physikalisch motivierte Diskretisierung des unendlich dimensionalen, elastischen Verteilermasts dar. Der Vorteil ist, dass gut entwickelte und effiziente Starrkörper Formalismen zur Modellierung eingesetzt werden können. Das resultierende Modell weist außerdem eine relativ niedrige Systemordnung auf. Anders als bei einer modalen Modellreduktion ist der Systemzustand der virtuellen Gelenke weiterhin eine physikalische Variable. Er beschreibt die konzentrierte Durchbiegung und Schwingung des Segments.

Das nichtlineare Modell des Verteilermasts wird um die Gleichgewichtslage der aktuellen Mastposition linearisiert. Damit ergibt sich in Abhängigkeit der Stellung und der Lastsituation des Masts ein lineares System, das kleine Abweichungen von der Gleichgewichtslage darstellt

$$\dot{x} = Ax + Bu,$$

$$y = Cx.$$

**5.3.4 Beobachter**

Basierend auf dem linearisiertem Modell wird ein Beobachter zur Schätzung der Systemzustände eingesetzt

$$\dot{\hat{x}} = A\hat{x} + Bu + L(y - C\hat{x}).$$

Der Beobachter rekonstruiert mithilfe der Ein- und Ausgänge des Systems den Systemzustand $\hat{x}$. Die Eingänge des Systems u sind dabei die Sollwerte der Hydraulik. Die Ausgänge y sind die Messwerte der Position und des Schwingungszustands des Verteilermasts. Durch die Fusionierung der verschiedenen Messsignale verbessert sich die Robustheit der Schwingungsdämpfung gegenüber den Messprinzip bedingten Drifterscheinungen der Drehratensensorik. Der modellbasierte Beobachter stellt außerdem sicher, dass das Messsignal der Drehratensensoren in die separaten Anteile der Gelenkbewegung und der Schwingung aufgeteilt wird. Die Regelung dämpft damit gezielt die strukturellen Schwingungen, ohne die Sollbewegung zu beeinflussen. Die Beobachterverstärkung L wird durch ein geeignetes Verfahren wie z. B. Polvorgabe oder durch einen Kalman Filter gewählt.

### 5.3.5 Regelverstärkung

Das linearisierte Modell dient zur Auslegung der Rückführverstärkungen K des Regelkreises

$$u = K\hat{x}.$$

Dabei werden die Pole in der komplexen Halbebene so positioniert, dass sich die Dämpfung des Systems erhöht. Die Schwingungen im Verteilermast werden somit gedämpft. Der Regler erhält den geschätzten Zustand des Beobachters $\hat{x}$, verstärkt die Signale und führt sie als Sollwerte der Hydraulik zu (siehe Fig. 4). Die Regelverstärkung K wird durch ein geeignetes Verfahren wie z. B. Polvorgabe oder optimierungsbasierten Verfahren (LQR) berechnet.

Der oben beschriebene Entwurfsprozess für Beobachter und Regler gilt für eine spezifische Gleichgewichtslage des Verteilermasts. Für eine Änderung der Maststellung wird deshalb der Entwurfsprozess wiederholt und an die aktuelle Stellung angepasst. Durch die Nachführung der Regelungsparameter wird die Funktionsfähigkeit der Schwingungsdämpfung für jede Mastposition gewährleistet.

Durch den zyklischen Entwurf von Beobachter und Regler ergeben sich die Verstärkungen in Abhängigkeit von der aktuellen Stellung und Lastsituation des Verteilermasts. Die variable Eigenfrequenz des Masts ist somit im Regelungsentwurf implizit berücksichtigt.

### 5.3.6 Horizontale Schwingungsdämpfung

Die Schwingungsdämpfung kann auch für Schwingungen in der horizontalen Ebene eingesetzt werden. Der Hydraulikmotor am Mastbock dient dabei als Aktor. Die Mastposition um die Hochachse wird durch einen Winkelgeber erfasst. Die Drehwinkelsensoren zur Schwingungsmessung sind in diesem Fall durch eine Detektionsrichtung in der horizontalen Ebene und Torsion ausgeführt oder erweitert. Die Sensoren sind auf einem oder mehreren Segmenten angebracht und messen die Drehrate um die Hochachse und die Längsachse.

In der horizontalen Ebene ist horizontale Biegung mit der Torsion der Segmente verkoppelt. Der Verteilermast erfährt somit in Abhängigkeit von der Position gleichzeitig eine horizontale Biegung und eine Torsion. Dieser Effektor wird der Modellierung berücksicht.

Das dynamische Modell des Verteilermasts (Abschnitt 5.3.3) wird um eine horizontale Komponente ergänzt. Die virtuellen Gelenke in den Segmenten sind dazu als mehrachsige Drehgelenke ausgeführt, die Biegung in der horizontalen Ebene und Torsion erfassen. Die Drehung um die Hochachse wird durch ein Gelenk am Drehbock berücksichtigt. Die Art und der Aufbau des Modells bleiben dabei gegen über Abschnitt 5.3.3 erhalten.

Analog zu dem Vorgehen in Abschnitt 5.3.3, 5.3.4 und 5.3.5 werden für das linearisierte erweiterte Modell ein Beobachter und eine Rückführverstärkung entworfen. Dabei kann entweder eine separate horizontale Schwingungsdämpfung oder eine kombinierte vertikale und horizontale Schwingungsdämpfung umgesetzt werden. Der modellbasierte Beobachter stellt sicher, dass das Messsignal der Drehratensensoren in die separaten Anteile der Hochachsenbewegung und der Schwingung aufgeteilt wird. Die Regelung dämpft damit gezielt die strukturellen Schwingungen der horizontalen Biegung und Torsion, ohne die Sollbewegung zu beeinflussen.

### 5.3.7 Weitere Eigenschaften

Die Bewegungsvorgaben des Bedieners werden durch die Schwingungsdämpfung explizit berücksichtigt. Das heißt, die gewollte Verfahrbewegung wird durch die Regelung zugelassen und nur die überlagerten strukturellen Schwingungen gedämpft. Um die Schwingungsanregung beim Verfahren zu reduzieren, ist außerdem eine Vorsteuerung vorgesehen. Diese berechnet aus dem Sollwert des Bedieners Ansteuersignale, die die gewollte Mastbewegung ausführen und dabei keine Schwingung anregen. Zu diesem Zweck wird ein Notch-Filter eingesetzt, das abhängig von der aktuellen Mastposition die Eigenfrequenzen des Verteilermasts bei der Verfahrbewegung unterdrückt (siehe Fig. 3).

Die Sollwertsignale für die Hydraulik werden durch eine unterlagerte Achsregelung an den Zylindern umgesetzt. Die Achsregelung wandelt eine Sollwinkelgeschwindigkeitsvorgabe u der Gelenke in die translatorische Istgeschwindigkeit der Zylinder. Dabei werden die Umlenkkinematik, sowie Nichtlinearitäten der Hydraulik durch eine Vorsteuerung berücksichtigt (siehe Fig. 5). Als Messgröße der Rückführung kann entweder der Druck, die Zylinderposition oder die Zylindergeschwindigkeit ausgeführt sein. Als Alternative kann auch die Zylindergeschwindigkeit aus der Position über eine separate Signalbearbeitung berechnet werden. Die Zylinder übertragen die Kraft $F_u$ auf den Verteilermast und erzeugen somit eine Bewegung der Gelenke. Die Achsregelung ist wie oben beschrieben dezentral und jedem Gelenk separat unterlagert.

### 6. Störgrößenaufschaltung

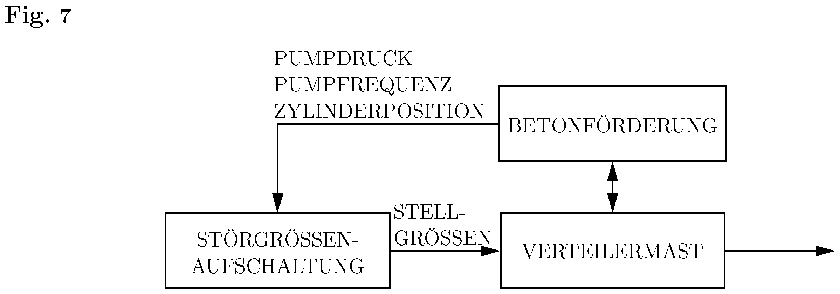

Traditionell werden rückführungsbasierte Schwingungsdämpfungen zur Reduktion von Schwingungen im Verteilermast eingesetzt. Diese Regelungen basieren auf der Rückführung der statischen und dynamischen Parameter des Verteilermasts. Dazu werden die Schwingungen in der Struktur gemessen, mit einem Regelalgorithmus verarbeitet und als Stellsignal auf die Aktorik der Betonpumpe zurückgeführt. Die erzeugte Bewegung der Aktorik wirkt auf den Verteilermast und dämpft aktiv Schwingungen. Ein Nachteil dieses Verfahrens ist, dass Schwingungen erst kompensiert werden können, wenn sie am Mast gemessen werden. Das heißt die Schwingungen müssen erst in der Struktur auftreten, um gedämpft zu werden. Das nachfolgend dargestellte Verfahren verfolgt einen anderen Ansatz nach dem Prinzip der Störgrößenaufschaltung. Diese dämpft Schwingungen im System basierend auf der Ursache anstatt - wie einem bei rückführungsbasierten Verfahren - basierend auf der Wirkung (siehe Fig. 7). Die Schwingungsanregung im Verteilermast ist zu einem großen Teil auf die Ursache der Betonförderung zurückzuführen. Sie stellt demnach eine Störgröße auf das System dar, die kompensiert werden soll.

Der Vorteil der Störgrößenaufschaltung gegenüber einer traditionellen Schwingungsdämpfung ist, dass die Störgrößen kompensiert werden können, bevor sie sich auf das System auswirken. Das heißt die Anregung der Betonförderung wird eliminiert, bevor sie als Schwingung im Verteilermast sichtbar ist.

Das Ziel der Störgrößenaufschaltung ist somit die Reduktion von Schwingungen im Verteilermast auf Basis von charakteristischen Messgrößen der Betonförderung. Die Messgrößen beschreiben dabei den Zustand der Betonförderung und nicht den Schwingungszustand des Verteilermasts. Typische Messgrößen der Betonförderung sind der Druck am Eingang der Förderleitung, die Frequenz des Pumpprozesses und die Position und Geschwindigkeit des Förderkolbens.

Mit den Messgrößen werden über ein Modell der Betonförderung die Störkräfte auf den Verteilermast rekonstruiert und verstärkt auf die Aktorik aufgeschaltet. Die Verstärkung kann dabei so entworfen werden, dass der Einfluss der Störkräfte auf einen bestimmten Punkt des Verteilermasts eliminiert wird. Dazu wird die Mastspitze gewählt, um die Lage des Endschlauchs ruhig und konstant zu halten.

Zur Reduktion der Schwingen auf Grund der Betonförderung werden zwei Verfahren vorgeschlagen: die klassische modellgestützte Störgrößenaufschaltung und die Störgrößenaufschaltung mit einem Störbeobachter.

### 6.1 Klassische modellgestützte Störgrößenaufschaltung

#### 6.1.1 Überblick

##### 6.1.1.2 Funktion

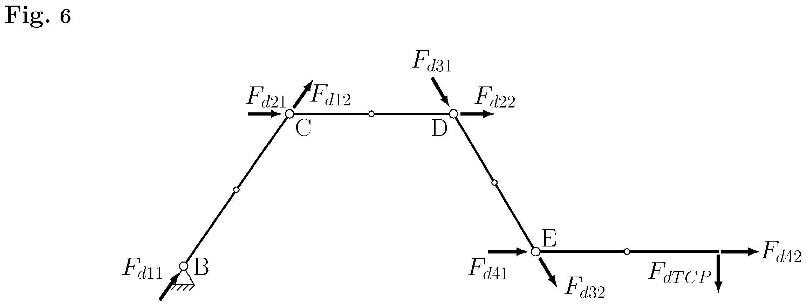

Die Berechnung der in Fig. 6 dargestellten Störkräfte erfolgt über ein mathematisches Modell der Betonförderung entlang des Masts.

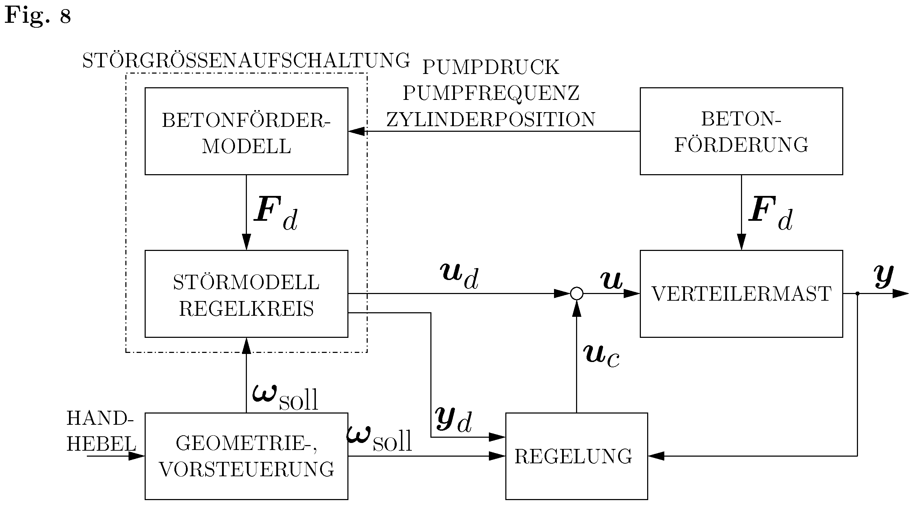

- Berechnung der Störkräfte auf den Verteilermast aus Messsignalen der Betonförderung (Druck, Frequenz, Zylinderposition) über Betonfördermodell (siehe Fig. 8).

- Berechnung des Einfluss der Störkräfte auf den Verteilermast im Störmodell.

- Zustandsregelung des Störmodells. Die Stellgröße $u_d$ des geregelten Störmodells ist die Stellgröße u der Hydraulik der Betonpumpe.

- Die Zustandsregelung kann durch eine Ausgangsrückführung erweitert werden. Dabei werden die Bewegungen der Mastspitze gedämpft.

- Der Arbeitspunkt ist die aktuelle Position des Verteilermasts. Bei Veränderung der Mastpostion durch eine Verfahrbewegung wird der Arbeitspunkt nachgeführt. D.h. die Höhe der Mastspitze nach dem Verfahren stellt den neuen Arbeitspunkt dar.

- Abweichungen vom Sollwert $y_d$ (siehe Fig. 8) werden über einen Regelkreis mit den realen Messwerten der Betonpumpe $y$ kompensiert. Dieser Regelkreis kann die Schwingungsdämpfung aus Abschnitt 5.2 darstellen.

#### 6.1.1.2 Anmerkungen

- Der zusätzliche Regelkreis des Störmodells ermöglicht eine Kompensation der Störgrößen $F_d$ unabhängig von der äußeren Regelung zur Schwingungsdämpfung (Messsignal y). Da der Zustandsregler ein virtuelles Störmodell beaufschlagt ist der vollständige Zustand $x_d$ verfügbar.
- Beschränkungen der Stellgröße können einfach durch Beschränkungen im Regelkreis der Störgrößenaufschaltung berücksichtigt werden.

#### 6.1.1.3 Sensorik

- Position Verteilermast

- Messwerte zur Betonförderung: Amplitude bzw. Zylinderposition, Zylindergeschwindigkeit, Frequenz der Pumpe und/oder Betondruck am Eingang der Förderleitung

### 6.1.1.3 Aktorik

- Alle Hydraulikzylinder (vertikale Ebene)

### 6.1.2 Ausführungsbeispiel

### 6.1.2.1 Modellierung

Die Modellierung der Betonförderung bildet den Betonfluss in der Förderleitung von der Förderpumpe im Fahrzeug bis zum Endschlauch an der Mastspitze ab. Dabei werden die strömungsbedingten Störkräfte der Betonförderung auf den Verteilermasts berechnet.

Die Entstehung der Störkräfte ist vorwiegend auf Reibungskräfte an der Rohrinnenwand und Trägheitskräfte durch die Betonstromumlenkung in den Rohrbögen zurückzuführen. Durch die instationäre, periodische Förderung entstehen dabei impulsartige Kräfte, die über die Rohrbefestigungen auf den Verteilermast übertragen werden. Die Kräfte sind dabei von einer Vielzahl an Faktoren abhängig. Der größte Einfluss sind die rheologischen Eigenschaften und die Zusammensetzung des Betons. Je nach Art und Konsistenz des Betons ergeben sich stark unterschiedliche Schwingungsanregungen im Verteilermast. Eine weitere Größe ist der sogenannte Wandeffekt. Aufgrund der Viskosität und der inhomogenen Zusammensatzung des Fluids bildet sich während der Förderung im Wandbereich eine Grenzschicht mit niedriger Fließgrenze und Viskosität. Die Grenzschicht wirkt wie ein Schmierfilm und verringert die Reibkräfte im Wandbereich. Weitere Faktoren sind außerdem der variable Füllstandsfaktor im Förderkolben und die Menge an gelöster Luft im Beton. Die Unsicherheit und die Variabilität der oben genannten Faktoren führen dazu, dass eine direkte, rein stoffbasierte Modellierung mit großen Schwierigkeiten verbunden ist. Aus diesem Grund wird eine auf Messungen gestützte Modellierung vorgeschlagen. Die grundlegende Idee ist auf die genaue Abbildung der Strömungsverhältnisse innerhalb des Rohrs zu verzichten und stattdessen nur die wirkenden Kräfte auf die Rohrwand zu berücksichtigen.

Der Ansatz verwendet dazu ein äquivalentes Newtonsches Fluid, um die Reibungs- und Trägheitskräfte des Fluids auf die Rohrwand zu modellieren.

Die Stoffeigenschaften des äquivalenten Fluids werden aus den Messgrößen der Betonförderung bestimmt. Insbesondere wird zumindest die Viskosität des äquivalenten Fluids aus dem Betondruck und der Strömungsgeschwindigkeit des Betons bestimmt. Als Dichte des äquivalenten Fluids wird ein abgespeicherter Mittelwert für die Dichte von Beton herangezogen.

Dabei lässt sich unter der Annahme von Umgebungsdruck am Endschlauch und durch die Messung des Eingangsdrucks die Druckdifferenz über die gesamte Rohrleitung berechnen. Durch Berücksichtigung der Maststellung wird außerdem der hydrostatische Druckverlust der Strömung bestimmt. Die Ausgangsgrößen des Modells sind die konzentrierten Störkräfte $F_d$ in jedem Gelenk der Betonpumpe (siehe Fig. 6).

Die Wirkung der konzentrierten Störkräfte $F_d$ wird über eine Kopplung mit einem mechanischen Modell des Verteilermasts berechnet. Das mechanische Modell berücksichtigt die dynamische und elastische Verformung der Segmente unter dem Einfluss der Störkräfte über den gesamten Verteilermast.

### 6.1.2.2 Aufschaltung

Das verkoppelte Modell aus Betonförderung und Verteilermast dient dem Entwurf einer modellgestützten dynamischen Störgrößenaufschaltung. Dabei wird das Modell um einen Regelkreis zur Reduktion der Störgrößen im Verteilermast erweitert (siehe Störmodell Regelkreis in Fig. 8). Anders als bei der klassischen Rückführung wird nicht die reale Strecke geregelt, sondern nur das "virtuelle" Modell. Das hat Vorteile für den Regelungsentwurf, da keine Streckenunsicherheiten oder Störgrö-ßen auftreten. Außerdem steht der gesamte Zustandsvektor ohne den Einsatz eines Beobachters zur Verfügung. Die Regelung wird so ausgelegt, dass der Einfluss der Störkräfte auf die Mastspitze minimiert wird.

Zur Kompensation der Störkräfte im realen System wird nun die Stellgröße des virtuellen Regelkreises $u_d$ auf die Aktorik aufgeschaltet. Damit ergibt sich eine Vorsteuerung, die ohne Rückführung des dynamischen Zustands des Verteilermasts auskommt.

### 6.1.2.3 Regelung

Die Störgrößenaufschaltung wird mit einer traditionellen Schwingungsdämpfung kombiniert, um Schwingungen aus der Verfahrbewegung des Masts und Unsicherheiten in der Modellierung zu kompensieren. Die Schwingungsdämpfung basiert dabei auf der Messung und der Rückführung der Position und des Schwingungszustands des Verteilermasts. Durch die Berücksichtigung der virtuellen Ausgänge $y_d$ und der Messgrößen $y$ wird die Reglung so ausgelegt, dass die Stellgrößen der Störgrößenaufschaltung $u_d$ ungehindert auf die Strecke wirken. Die Schwingungsdämpfung greift nur dann ein, wenn die Zustände der realen Strecke von den Zuständen des virtuellen Modells abweichen.

### 6.1.2.4 Weitere Eigenschaften

Zur Bestimmung des Betondrucks am Eingang der Strecke kann alternativ auch der Hydraulikdruck der Förderzylinder gemessen werden. Der korrespondierende Betondruck ergibt sich aus einer Umrechnung mit dem Kolbenflächenverhältnis.

Weiterhin kann auch die Strömungsgeschwindigkeit des Betons aus der Geschwindigkeit der Förderzylinder bestimmt werden.

Damit wird der Einsatz eines teuren und verschleißanfälligen Drucksensors und/oder Strömungssensors in der Förderleitung vermieden.

Die Leistungsfähigkeit der oben beschriebenen Störgrößenaufschaltung ist stark von der Genauigkeit des Betonförder- und des mechanischen Modells abhängig. Dies führt bei Parameterunsicherheit und Parametervariabilität zu Performancebeschränkungen.

## 6.2 Asymptotische Störkompensation

### 6.2.1 Überblick

#### 6.2.1.1 Funktion

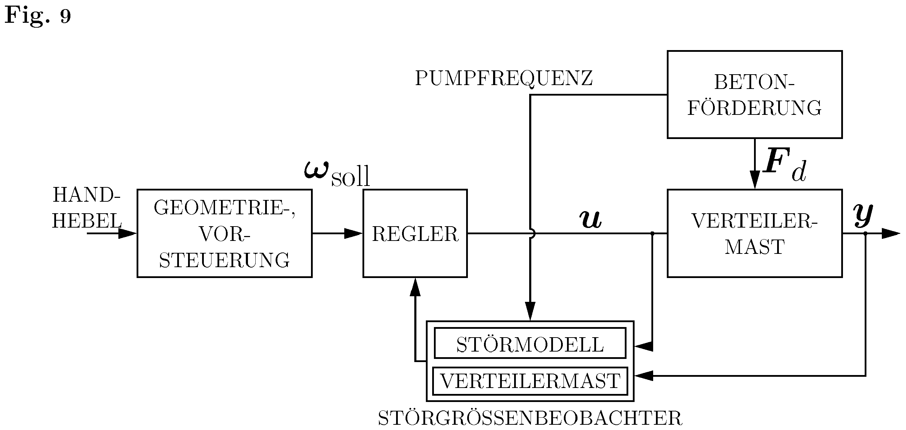

- Schätzung der Störgröße aus den Schwingungsmesswerten des Verteilermasts und der Pumpfrequenz der Betonförderung (siehe Fig. 9).
- Verstärkung des Störsignals im Störregler und Aufschaltung auf die Aktorik der Betonpumpe.
- Aus Stabilitätsgründen benötigt die Störgrößenkompensation eine Schwingungsdämpfung, welche beispielsweise so aufgebaut sein kann wie in Abschnitt 5.2 beschrieben.
- Der Störbeobachter hat gegenüber der klassischen Störgrößenaufschaltung den Vorteil, dass das Störsignal vollständig aus der vorhandenen Sensorik der Schwingungsdämpfung geschätzt wird. Dadurch ist das Verfahren robust gegen- über Parameteränderungen der Betonförderung.
- Der Schätzalgorithmus kann beispielsweise als asymptotische Störkompensation nach Davison ausgeführt sein.
- Die Störgrößenkompensation basiert darauf, dass aus einem frei wählbaren Messausgang $y_d$ die Störgröße geschätzt/gelernt wird. Ziel ist es dabei mit geeigneten Stellgrößen diesen Messausgang $y_d$ auf einen Konstantwert zu regeln. Eine mögliche Wahl des Messausgangs $y_d$ ist die Höhe der Mastspitze in der vertikalen Ebene. Die Störkompensation reduziert damit Schwingungsbewegungen der Mastspitze.
- Der Arbeitspunkt ist die aktuelle Position des Verteilermasts. Bei Veränderung der Mastpostion durch Verfahrbewegung wird der Arbeitspunkt nachgeführt. D.h. die Höhe der Mastspitze nach dem Verfahren stellt den neuen Arbeitspunkt dar.

#### 6.2.1.2 Sensorik

- Position Verteilermast
- Pumpfrequenz der Betonförderung
- Messung Schwingungszustand des Verteilermastes: Drehratensensoren auf bestimmten Segmenten

#### 6.2.1.3 Aktorik

- Alle Hydraulikzylinder (vertikale Ebene)

#### 6.2.1.2 Anmerkungen

- Die asymptotische Störkompensation basiert darauf, angreifende Störsignale durch ein fiktives Störmodell abzubilden. Das Störmodell wird im Regelkreis integriert und von einem gewählten Messausgang solange angeregt, bis die Störungen in einem gewählten Messausgang kompensiert werden. Das Störmodell hat dabei die Eigenschaft auch bei verschwindendem Anregungssignal ein nicht verschwindendes Ausgangssignal zu liefern (grenzstabil). Dadurch erzeugt die Störkompensation die erforderlichen Stellgrößen, um die Einwirkung der Störgröße auszugleichen.
- Auf Grund des Schätzprozesses wirken die Störgrößen zumindest vorübergehend auf die Ausgänge des Systems. Dies führt dazu, dass die Störkompensation zu Beginn und bei großen Parameteränderungen einem Einschwingvorgang unterworfen ist.

### 6.2.2 Ausführungsbeispiel

#### 6.2.2.1 Modellierung

Im Folgenden wir ein alternatives Verfahren zur obigen Störgrößenaufschaltung vorgestellt. Die grundlegende Idee des Verfahrens ist, die Störkräfte aus den Messwerten des Verteilermasts zu schätzen. Dabei wird die Periodizität der Betonförderung genutzt, um ein modales Modell der Störkräfte aufzustellen. Das Modell setzt sich aus der Grundfrequenz und deren Vielfachen zusammen. Die einzelnen Zustände bilden als modale Koordinaten die Schwingungsform der Störgröße nach.

Eine modale Koordinate hat keine physikalische Bedeutung, sondern gibt nur den Anteil der jeweiligen Frequenz an der Schwingungsform der Störgröße wieder.

#### 6.2.2.2 Schätzverfahren

Basierend auf dem modalen Modell werden die Störkräfte durch einen Störbeobachter oder eine asymptotische Störkompensation aus den Messwerten des Verteilermasts geschätzt. Die Schätzverfahren beruhen auf dem Innere-Modell-Prinzip. Das Prinzip definiert, dass ein stabiler Regelkreis nur dann eine Störung vollständig unterdrücken kann, wenn er ein inneres Modell des Störsignals besitzt. Das Modell ist dabei grenzstabil und setzt sich nur aus konjugiert komplexen Polstellenpaaren der Förderfrequenzen auf der imaginären Achse der komplexen Halbebene zusammen. Durch den Störbeobachter oder der asymptotischen Störkompensation wird der Anfangszustand des Modalmodells aus den Messsignalen des Verteilermasts adaptiert. Dies entspricht einer Schätzung der unbekannten Amplitude und Phasenlage der Störkräfte. Je mehr Frequenzen das Modell enthält, desto genauer kann die Schwingungsform der Störgröße dargestellt werden. Die größere Anzahl an Frequenzen benötigt jedoch mehr Zeit, um die vorliegende Schwingungsform zu lernen. Während des Lernprozesses tritt eine Einschwingbewegung auf, deren Amplitude mit der Anzahl der Frequenzen zunimmt. Für eine gute Störunterdrückung muss deshalb die Anzahl der Frequenzen so gewählt werden, dass einerseits die Störgröße ausreichend genau abgebildet wird und andererseits das Einschwingverhalten kurz und mit geringer Amplitude auftritt.

### 6.2.2.3 Regelung

Die rekonstruierten Störgrößen werden über eine Regelung auf die Aktorik des Verteilermasts aufgeschaltet (siehe Fig. 9). Die Störgrößenaufschaltung ist mit einer Schwingungsdämpfung basierend auf den Messgrößen des Verteilermasts $y$ kombiniert, um die Stabilität des Systems zu gewährleisten. Die Zustände des Systems werden basierend auf dem Modell des Verteilermasts und dem Störmodell durch den Störbeobachter geschätzt. Die Messgrößen umfassen dabei die Mastposition und den Schwingungszustand des Verteilermasts. Der Regler in Fig. 9 verstärkt somit die geschätzten Störgrößen und Zustände des Systems. Die Störgrößenaufschaltung kann so ausgelegt werden, dass der Einfluss der Störkräfte auf die Mastspitze minimiert wird.

### 6.2.2.4 Weitere Eigenschaften

Anders als beim ersten Verfahren lernt der Störbeobachter oder die asymptotische Störkompensation die Störkräfte aus den Messwerten y des dynamischen Schwingungszustands des Verteilermasts. Damit kann die Anzahl der Sensoren für die Betonförderung reduziert werden. Die benötigte Messgröße ist die Pumpfrequenz, welche über die Umschaltzeitpunkte der Förderzylinder in der Software bestimmt werden kann. Ein weiterer Vorteil des Verfahrens ist die Robustheit gegenüber Streckenparameteränderungen und Variation der Betoneigenschaften.

### 6.3 Weitere Eigenschaften der Störgrößenaufschaltung

Die oben beschriebenen Störgrößenaufschaltungen gelten für eine spezifische Gleichgewichtslage des Verteilermasts. Für eine Änderung der Maststellung wird deshalb der Entwurfsprozess wiederholt und an die aktuelle Stellung angepasst. Durch die Nachführung der Regelungsparameter wird die Funktionsfähigkeit der Störgrößenaufschaltung für jede Mastposition gewährleistet.

Die Sollwertsignale für die Hydraulik werden durch eine unterlagerte Achsregelung an den Zylindern umgesetzt. Die Achsregelung wandelt eine Sollwinkelgeschwindigkeitsvorgabe der Gelenke in die translatorische Istgeschwindigkeit der Zylinder. Dabei werden die Umlenkkinematik, sowie Nichtlinearitäten der Hydraulik durch eine Vorsteuerung berücksichtigt. Je nach Ausführung kann eine Rückführung des Drucks bzw. der Zylinderposition oder -geschwindigkeit umgesetzt werden. Die Achsregelung ist dezentral ausgeführt und somit jedem Gelenk separat unterlagert.

Die Bewegungsvorgaben des Bedieners werden durch die Störgrößenaufschaltung und Schwingungsdämpfung explizit berücksichtigt. Das heißt, die gewollte Verfahrbewegung wird durch die Regelung zugelassen und nur die überlagerten strukturellen Schwingungen gedämpft. Um die Schwingungsanregung beim Verfahren zu reduzieren, ist außerdem eine Vorsteuerung vorgesehen. Diese berechnet aus dem Sollwert des Bedieners Ansteuersignale $\omega_{soll}$, die die gewollte Mastbewegung ausführen und dabei keine Schwingung anregen. Zu diesem Zweck wird ein Notch-Filter eingesetzt, das abhängig von der aktuellen Mastposition die Eigenfrequenzen des Verteilermasts bei der Verfahrbewegung unterdrückt.

Die Vorsteuerung ist für die vorgestellten Störgrößenaufschaltungen in den Fig. 8 und 9 durch einen Signalblock gekennzeichnet. Für die modellgestützte dynamische Störgrößenaufschaltung wird das Vorsteuersignal $\omega_{soll}$ zusätzliche im Störmodell Regelkreis berücksichtigt.

### Patentansprüche

1. Großmanipulator, insbesondere für Betonpumpen, mit

    einem Gelenkarm, welcher einen um eine vertikale Achse (A) drehbaren Drehbock (3) und mindestens zwei mittels Gelenken (B - E) um horizontale Achsen verschwenkbare Segmente (4 - 7) aufweist, wobei der Drehbock (3) über einen Aktuator um die vertikale Achse verfahrbar ist und die Segmente ( 4 - 7) über Aktuatoren (14 - 17) um die horizontalen Achsen verschwenkbar sind,

einer Steuerung zur Ansteuerung der Aktuatoren (14 - 17), wobei die Steuerung eine Schwingungsdämpfung zur Dämpfung von horizontalen und/oder vertikalen Schwingungen des Gelenkarms umfasst, und

mindestens einem Drehratensensor (18 - 21), dessen Messsignale in die Schwingungsdämpfung eingehen,

**dadurch gekennzeichnet,**

**dass** der Großmanipulator den Drehgelenken (B - E) zugeordnete Sensoren zur mittelbaren oder unmittelbaren Messung des jeweiligen Drehwinkels der Gelenke des Gelenkarms umfasst, wobei die Messsignale der Sensoren in die Steuerung des Großmanipulators eingehen, und dass die Schwingungsdämpfung auf Grundlage der Messwerte des mindestens einen Drehratensensors (18 - 21) aus den Schwingungen der einzelnen Segmente ( 4 - 7) einen Schwingungszustand des gesamten Gelenkarms bestimmt, wobei die Schwingungsdämpfung bevorzugt ohne die Verwendung von an den Segmenten ( 4 - 7) angeordneten geodätischen Sensoren und/oder Inertialmesseinheiten und/oder Deformationssensoren erfolgt.

2. Großmanipulator nach Anspruch 1, wobei mindestens ein Drehratensensor (18 - 20) in einem vorderen Bereich eines Segmentes ( 4 - 6) angeordnet ist, welches zwischen dem Drehbock (3) und einem die Mastspitze (22) bildenden Segment (7) im Gelenkarm angeordnet ist, und/oder wobei auf mindestens zwei Segmenten ( 4 - 7) Drehratensensoren angeordnet sind, wobei bevorzugt die Schwingungsdämpfung auf Grundlage der Messwerte der mindestens zwei Drehratensensoren (18 - 20) aus den Schwingungen einen Schwingungszustand des gesamten Arms bestimmt, und/oder wobei die Drehratensensoren (18 - 21) jeweils in einem vorderen Bereich der Segmente ( 4 - 7) angeordnet sind, und/oder wobei die mindestens zwei Segmente (4 - 6) zwischen dem Drehbock (3) und einem die Mastspitze (22) bildenden Segment (7) im Gelenkarm angeordnet sind und weiter bevorzugt an dem die Mastspitze (22) bildenden Segment (7) ein weiterer Drehratensensor (21) angeordnet ist.

3. Großmanipulator nach Anspruch 1 oder 2, wobei die Messsignale der den Drehgelenken (B - E) zugeordneten Sensoren in die Schwingungsdämpfung eingehen und/oder zur Bestimmung der aktuellen Stellung des Gelenkarms dienen.

4. Großmanipulator, insbesondere für Betonpumpen, mit

einem Gelenkarm, welcher einen um eine vertikale Achse (A) drehbaren Drehbock (3) und/oder mindestens ein mittels eines Gelenkes (B - E) um eine horizontale Achse verschwenkbares Segment (4 - 7) aufweist, wobei der Drehbock (3) über einen Aktuator um die vertikale Achse verfahrbar ist und/oder das mindestens eine Segment (4 - 7) über einen Aktuator (14 - 17) um die horizontale Achse verschwenkbar ist, und

einer Steuerung zur Ansteuerung der Aktuatoren (14 - 17), wobei die Steuerung eine Schwingungsdämpfung zur Dämpfung von horizontalen und/oder vertikalen Schwingungen des Gelenkarms umfasst,

**dadurch gekennzeichnet,**

**dass** die Schwingungsdämpfung unter Verwendung eines physikalischen Modells des Gelenkarms erfolgt, bei welchem die Flexibilität mindestens eines Segmentes (4 - 7) durch mindestens ein innerhalb dieses Segmentes angeordnetes virtuelles Gelenk beschrieben wird.

5. Großmanipulator nach Anspruch 4, wobei es sich bei dem physikalischen Modell um ein Starrkörpermodell mit aktuierten Gelenken handelt, und/oder wobei dem virtuellen Gelenk ein Federelement und ein Dämpferelement zugeordnet ist, wobei die Federkonstante und die Dämpferkonstante bevorzugt so gewählt werden, dass das virtuelle Gelenk die Größe der Durchbiegung und/oder Torsion und/oder erste Eigenfrequenz des realen Segmentes (4 - 7) beschreibt, und/oder wobei mehrere und bevorzugt alle Segmente (4 - 7) durch ein innerhalb des jeweiligen Segmentes (4 - 7) angeordnetes virtuelles Gelenk beschrieben werden und/oder wobei innerhalb des Segmentes (4 - 7) genau ein virtuelles Gelenk vorgesehen ist, und/oder wobei das virtuelle Gelenk mindestens zwei und bevorzugt drei Freiheitsgrade der Bewegung aufweist.

6. Großmanipulator, insbesondere nach einem der vorangegangenen Ansprüche, insbesondere für Betonpumpen, mit einem Gelenkarm, welcher einen um eine vertikale Achse drehbaren Drehbock und mindestens ein mittels eines Gelenkes um eine horizontale Achse verschwenkbares Segment aufweist, wobei der Drehbock über einen Aktuator um die vertikale Achse verfahrbar ist und das mindestens eine Segment über einen Aktuator um die horizontale Achse verschwenkbar ist, und mit einer Steuerung zur Ansteuerung der Aktuatoren, wobei die Steuerung eine Schwingungsdämpfung zur Dämpfung von horizontalen Schwingungen des Gelenkarms umfasst, welche durch Ansteuerung des Aktors des Drehbocks erfolgt, **dadurch gekennzeichnet, dass** die Schwingungsdämpfung die Torsion mindestens eines Segmentes (4 - 7) und/oder des Gelenkarms berücksichtigt.

**7.** Großmanipulator nach Anspruch 6, wobei die Schwingungsdämpfung die Torsion mindestens eines Segmentes (4 - 7) und/oder des Gelenkarms durch ein physikalisches Modell des Gelenkarms berücksichtigt, welches eine Torsion des Gelenkarms und/oder eines oder mehrerer Segmente (4 - 7) des Gelenkarms beschreibt, insbesondere über mindestens ein sich in Längsrichtung des Segmentes (4 - 7) erstreckendes virtuelles Drehgelenk, und/oder wobei der Großmanipulator mindestens zwei an unterschiedlichen Segmenten (4 - 7) angeordnete Drehratensensoren (18 - 21) aufweist, wobei die Torsion aus einem Vergleich der Messwerte der Drehratensensoren (18 - 21) bestimmt wird, wobei die Drehratensensoren (18 - 21) bevorzugt mindestens zwei Sensitivitätsrichtungen aufweisen, insbesondere eine erste horizontale Sensitivitätsrichtung und eine zweite, in einer vertikalen Ebene verlaufende Sensitivitätsrichtung.

**8.** Großmanipulator nach einem der vorangegangenen Ansprüche, wobei die Steuerung einen Beobachter umfasst, welcher den Zustand des Gelenkarms schätzt, insbesondere auf Grundlage der Messwerte der Drehratensensoren (18 - 21) gemäß einem der Ansprüche 1 bis 3 oder 7 und/oder des physikalischen Modells gemäß einem der Ansprüche 4 bis 5 oder 7.

**9.** Großmanipulator nach einem der vorangegangenen Ansprüche, wobei die Schwingungsdämpfung eine Regelung umfasst, welche durch Rückführung mindestens einer der folgenden Größen erfolgt: Geschwindigkeit und Position einer oder mehrere der Gelenke (B - E), Geschwindigkeiten und Positionen der Biegung und/oder Torsion einer oder mehrere der Segmente (4 - 7) , wobei die zurückgeführten Größen bevorzugt durch einen Beobachter geschätzt werden, insbesondere einen Beobachter gemäß Anspruch 8.

**10.** Großmanipulator nach einem der Ansprüche 4 bis 9, wobei eine Schätzung des Systemzustandes und/oder die Schwingungsdämpfung, insbesondere eine Schätzung durch einen Beobachter gemäß Anspruch 8 und/oder eine Regelung gemäß Anspruch 9, auf Grundlage einer Linearisierung eines physikalischen Modells erfolgt, wobei die Linearisierung bevorzugt um die Gleichgewichtslage der aktuellen Stellung des Gelenkarms erfolgt und/oder wobei die Linearisierung durch die Steuerung in Abhängigkeit von der aktuellen Stellung des Gelenkarms vorgenommen wird.

**11.** Großmanipulator nach einem der vorangegangenen Ansprüche, wobei die Steuerung eine Vorsteuerung umfasst, welche aus einem von einem Bediener vorgegebenen Sollwert Ansteuersignale berechnet, durch welche die gewünschte Mastbewegung durchgeführt und eine Schwingungsanregung des Gelenkarms vermindert wird, wobei bevorzugt Eigenfrequenzen des Gelenkarms unterdrückt werden, welche bevorzugt in Abhängigkeit von der aktuellen Stellung des Gelenkarms bestimmt werden, und/oder wobei die Steuerung den jeweiligen Gelenken (B - E) zugeordnete Achsregler umfasst, wobei die Steuerung Ansteuersignale für die Sollwinkelgeschwindigkeit der Achsen erzeugt, auf deren Grundlage der dem jeweiligen Gelenk (B - E) zugeordnete Achsregler Ansteuersignale für den jeweiligen Aktuator (14 - 17) erzeugt, wobei die Achsregler bevorzugt auf einer inversen Umlenkkinematik beruhen und/oder eine inverse Nichtlinearität der Hydraulik umfassen.

**12.** Großmanipulator nach einem der vorangegangenen Ansprüche, wobei der Gelenkarm als Verteilermast dient, an welchem eine Betonleitung entlang geführt ist, welche von einer Förderpumpe (1) mit Beton beschickt wird, wobei bevorzugt die Steuerung eine Störgrößenaufschaltung zur Verringerung der durch die Betonförderung induzierten Schwingungen des Verteilermastes umfasst, wobei die Störgrößenaufschaltung weiter bevorzugt auf Grundlage eines physikalischen Modells der Betonförderung erfolgt, welches die strömungsbedingten Störkräfte der Betonförderung auf den Verteilermast beschreibt oder die Störgrößenaufschaltung die Störkräfte aus Messwerten der Stellung und/oder des Schwingungszustands des Verteilermastes schätzt.

**13.** Steuersoftware für einen Großmanipulator nach einem der vorangegangenen Ansprüche, wobei die Steuersoftware bei ihrer Ausführung eine Steuerung zur Ansteuerung der Aktuatoren des Großmanipulators mit einer Schwingungsdämpfung zur Dämpfung von horizontalen und/oder vertikalen Schwingungen des Gelenkarms implementiert, wobei

     a) die Messsignale mindestens eines Drehratensensors (18 - 21) in die Schwingungsdämpfung und die Messsignale von den Drehgelenken (B - E) des Großmanipulators zugeordneten Sensoren zur mittelbaren oder unmittelbaren Messung des jeweiligen Drehwinkels der Gelenke des Gelenkarms in die Steuerung eingehen, und wobei die Schwingungsdämpfung auf Grundlage der Messwerte des mindestens einen Drehratensensors (18 - 21) aus den Schwingungen der einzelnen Segmente ( 4 - 7) einen Schwingungszustand des gesamten Gelenkarms bestimmt, und/oder

     b) die Schwingungsdämpfung unter Verwendung eines physikalischen Modells des Gelenkarms erfolgt, bei welchem die Flexibilität mindestens eines Segmentes (4 - 7) durch mindestens ein innerhalb dieses Segmentes angeordnetes virtuelles Gelenk beschrieben wird, und/oder

c) die Schwingungsdämpfung durch Ansteuerung des Aktors des Drehbocks erfolgt, wobei die Schwingungsdämpfung die Torsion mindestens eines Segmentes (4 - 7) und/oder des Gelenkarms berücksichtigt.

14. Steuerung für einen Großmanipulator nach einem der vorangegangenen Ansprüche, zur Ansteuerung der Aktuatoren (14-17) des Großmanipulators wobei die Steuerung eine Schwingungsdämpfung zur Dämpfung von horizontalen und/oder vertikalen Schwingungen des Gelenkarms umfasst, wobei

a) die Messsignale mindestens eines Drehratensensors (18 - 21) in die Schwingungsdämpfung und die Messsignale von den Drehgelenken (B - E) des Großmanipulators zugeordneten Sensoren zur mittelbaren oder unmittelbaren Messung des jeweiligen Drehwinkels der Gelenke des Gelenkarms in die Steuerung eingehen, und wobei die Schwingungsdämpfung auf Grundlage der Messwerte des mindestens einen Drehratensensors (18 - 21) aus den Schwingungen der einzelnen Segmente ( 4 - 7) einen Schwingungszustand des gesamten Gelenkarms bestimmt, und/oder

b) die Schwingungsdämpfung unter Verwendung eines physikalischen Modells des Gelenkarms erfolgt, bei welchem die Flexibilität mindestens eines Segmentes (4 - 7) durch mindestens ein innerhalb dieses Segmentes angeordnetes virtuelles Gelenk beschrieben wird, und/oder

c) die Schwingungsdämpfung durch Ansteuerung des Aktors des Drehbocks erfolgt, wobei die Schwingungsdämpfung die Torsion mindestens eines Segmentes (4 - 7) und/oder des Gelenkarms berücksichtigt.

15. Betonpumpe, insbesondere Autobetonpumpe, mit einem Großmanipulator nach einem der vorangegangenen Ansprüche 1-12, wobei der Gelenkarm als Verteilermast dient, an welchem eine Betonleitung entlang geführt ist.

16. Verfahren zur Ansteuerung eines Großmanipulators und/oder einer Betonpumpe nach einem der vorangegangenen Ansprüche 1-12 oder 15, wobei

a) die Messsignale mindestens eines Drehratensensors (18 - 21) in die Schwingungsdämpfung und die Messsignale von den Drehgelenken (B - E) des Großmanipulators zugeordneten Sensoren zur mittelbaren oder unmittelbaren Messung des jeweiligen Drehwinkels der Gelenke des Gelenkarms in die Steuerung eingehen, und wobei die Schwingungsdämpfung auf Grundlage der Messwerte des mindestens einen Drehratensensors (18 - 21) aus den Schwingungen der einzelnen Segmente ( 4 - 7) einen Schwingungszustand des gesamten Gelenkarms bestimmt, und/oder

b) die Schwingungsdämpfung unter Verwendung eines physikalischen Modells des Gelenkarms erfolgt, bei welchem die Flexibilität mindestens eines Segmentes (4 - 7) durch mindestens ein innerhalb dieses Segmentes angeordnetes virtuelles Gelenk beschrieben wird, und/oder

c) die Schwingungsdämpfung durch Ansteuerung des Aktors des Drehbocks erfolgt, wobei die Schwingungsdämpfung die Torsion mindestens eines Segmentes (4 - 7) und/oder des Gelenkarms berücksichtigt und eine Torsionsschwingung des Gelenkarms dämpft.

**Claims**

1. Large manipulator, in particular for concrete pumps, comprising

an articulated arm which comprises a rotary support (3) rotatable about a vertical axis (A) and at least two segments (4-7) pivotable about horizontal axes by means of joints (B-E), wherein the rotary support (3) is displaceable about the vertical axis via an actuator and the segments (4-7) are pivotable about the horizontal axes via actuators (14-17),
a control for driving the actuators (14-17), wherein the control comprises a vibration damping for damping horizontal and/or vertical vibrations of the articulated arm, and
at least one rotation rate sensor (18-21) whose measurement signals are integrated into the vibration damping,
**characterised in that**
the large manipulator comprises sensors, associated with the rotary joints (BE), for indirectly or directly measuring the respective angle of rotation of the joints of the articulated arm, wherein the measurement signals of the sensors are integrated into the control of the large manipulator, and that the vibration damper determines a vibration state of the entire articulated arm on the basis of the measured values of the at least one rotation rate sensor (18-21) from the vibrations of the individual segments (4-7), wherein the vibration damping is preferably carried out without the use of geodetic sensors and/or inertial measurement units and/or deformation sensors arranged on the segments (4-7).

2. Large manipulator according to claim 1, wherein at least one rotation rate sensor (18-20) is arranged in a front region of a segment (4-6), which is arranged in the articulated arm between the rotary support (3) and a segment (7) forming the boom tip (22), and/or wherein rotation rate sensors are arranged on at least two segments (4-7), wherein the vibration damping preferably determines a vibration state of the entire arm on the basis of the measured values of the at least two rotation rate sensors (18-20) from the vibrations, and/or wherein the rotation rate sensors (18-21) are respectively arranged in a front region of the segments (4-7), and/or wherein the at least two segments (4-6) are arranged in the articulated arm between the rotary support (3) and a segment (7) forming the boom tip (22) and a further rotation rate sensor (21) is more preferably arranged on the segment (7) forming the boom tip (22).

3. Large manipulator according to claim 1 or 2, wherein the measurement signals of the sensors associated with the rotary joints (B-E) are integrated into the vibration damping and/or serve to determine the current position of the articulated arm.

4. Large manipulator, in particular for concrete pumps, comprising

> an articulated arm which comprises a rotary support (3) rotatable about a vertical axis (A) and/or at least one segment (4-7) pivotable about a horizontal axis by means of a joint (B-E), wherein the rotary support (3) is displaceable about the vertical axis via an actuator and/or the at least one segment (4-7) is pivotable about the horizontal axis via an actuator (14-17), and
> a control for driving the actuators (14-17), wherein the control comprises a vibration damping for damping horizontal and/or vertical vibrations of the articulated arm,
> **characterised in that**
> the vibration damping is carried out using a physical model of the articulated arm, in which the flexibility of at least one segment (4-7) is described by at least one virtual joint arranged within said segment.

5. Large manipulator according to claim 4, wherein the physical model is a rigid body model with actuated joints, and/or wherein a spring element and a damping element are associated with the virtual joint, wherein the spring constant and the damping constant are preferably selected in such a way that the virtual joint describes the size of the inflection and/or the torsion and/or the first natural frequency of the real segment (4-7) and/or wherein several and preferably all segments (4-7) are described by a virtual joint arranged within the respective segment (4-7), and/or wherein precisely one virtual joint is provided within the segment (4-7), and/or wherein the virtual joint has at least two and preferably three degrees of freedom of movement.

6. Large manipulator, in particular according to any one of the preceding claims, in particular for concrete pumps, having an articulated arm which comprises a rotary support rotatable about a vertical axis and at least one segment pivotable about a horizontal axis by means of a joint, wherein the rotary support is displaceable about the vertical axis via an actuator and the at least one segment is pivotable about the horizontal axis via an actuator, and having a control for driving the actuators, wherein the control comprises a vibration damping for damping horizontal vibrations of the articulated arm, which is carried out by driving the actuator of the rotary support, **characterized in that** the vibration damping takes into account the torsion of at least one segment (4-7) and/or of the articulated arm.

7. Large manipulator according to claim 6, wherein the vibration damping takes into account the torsion of at least one segment (4-7) and/or of the articulated arm by means of a physical model of the articulated arm, which describes a torsion of the articulated arm and/or of one or more segments (4-7) of the articulated arm, in particular via at least one virtual rotary joint extending in the longitudinal direction of the segment (4-7), and/or wherein the large manipulator comprises at least two rotation rate sensors (18-21) arranged on different segments (4-7), wherein the torsion is determined from a comparison of the measured values of the rotation rate sensors (18-21), wherein the rotation rate sensors (18-21) preferably have at least two directions of sensitivity, in particular a first horizontal direction of sensitivity and a second direction of sensitivity running in a vertical plane.

8. Large manipulator according to any one of the preceding claims, wherein the control comprises an observer which estimates the state of the articulated arm, in particular on the basis of the measured values of the rotation rate sensors (18-21) according to any one of claims 1 to 3 or 7 and/or the physical model according to any one of claims 4 to 5 or 7.

9. Large manipulator according to any one of the preceding claims, wherein the vibration damping comprises a regulation, which is carried out by feedback of at least one of the following quantities: speed and position of one or more of the joints (B-E), speeds and positions of the deflection and/or torsion of one or more of the segments (4-7), wherein the quantities fed back are preferably estimated by an observer, in particular an observer according to claim 8.

10. Large manipulator according to any one of claims 4 to 9, wherein an estimation of the system state and/or the vibration damping, in particular an estimation by an observer according to claim 8 and/or a regulation according to claim 9, is carried out on the basis of a linearisation of a physical model, wherein the linearisation is preferably performed around the equilibrium position of the current position of the articulated arm and/or wherein the linearisation is performed by the control depending on the current position of the articulated arm.

11. Large manipulator according to any one of the preceding claims, wherein the control comprises a precontrol which calculates driving signals from a target value predetermined by an operator, by means of which the desired boom movement is implemented and vibration excitation of the articulated arm is reduced, wherein natural frequencies of the articulated arm are preferably suppressed, which are preferably determined depending on the current position of the articulated arm and/or wherein the control comprises axial regulators associated with the respective joints (B-E), wherein the control generates driving signals for the target angular speed of the axes, on the basis of which the axial regulator associated with the respective joint (B-E) generates driving signals for the respective actuator (14-17), wherein the axial regulators are preferably based on inverse deflection kinematics and/or comprise inverse non-linearity of the hydraulic mechanism.

12. Large manipulator according to any one of the preceding claims, wherein the articulated arm serves as a distribution boom along which a concrete pipe is guided which is charged with concrete by a delivery pump (1), wherein the control preferably comprises a disturbance feedforward for reducing the vibrations, induced by the concrete delivery, of the distribution boom, wherein the disturbance feedforward is more preferably carried out on the basis of a physical model of the concrete delivery which describes the disturbance forces caused by flow, of the concrete delivery onto the distribution boom, or the disturbance feedforward estimates the disturbance forces from measured values of the position and/or the vibration state of the distribution boom.

13. Control software for a large manipulator according to any one of the preceding claims, wherein the control software implements, when executed, a control for driving the actuators of the large manipulator with a vibration damping for damping horizontal and/or vertical vibrations of the articulated arm, wherein

a) the measurement signals of at least one rotation rate sensor (18-21) are integrated into the vibration damping and the measurement signals of sensors associated with the rotary joints (B-E) of the large manipulator are integrated into the control for indirectly or directly measuring the respective angle of rotation of the joints of the articulated arm, and wherein the vibration damping determines a vibration state of the entire articulated arm on the basis of the measured values of the at least one rotation rate sensor (18-21) from the vibrations of the individual segments (4-7),
and/or
b) the vibration damping is carried out using a physical model of the articulated arm, in which the flexibility of at least one segment (4-7) is described by at least one virtual joint arranged within said segment,
and/or
c) the vibration damping is carried out by driving the actuator of the rotary support, wherein the vibration damping takes into account the torsion of at least one segment (4-7) and/or of the articulated arm.

14. Control for a large manipulator according to any one of the preceding claims, for driving the actuators (14-17) of the large manipulator, wherein the control comprises a vibration damping for damping horizontal and/or vertical vibrations of the articulated arm, wherein

a) the measurement signals of at least one rotation rate sensor (18-21) are integrated into the vibration damping and the measurement signals of sensors associated with the rotary joints (B-E) of the large manipulator are integrated into the control for indirectly or directly measuring the respective angle of rotation of the joints of the articulated arm, and wherein the vibration damping determines a vibration state of the entire articulated arm on the basis of the measured values of the at least one rotation rate sensor (18-21) from the vibrations of the individual segments (4-7),
and/or
b) the vibration damping is carried out using a physical model of the articulated arm, in which the flexibility of at least one segment (4-7) is described by at least one virtual joint arranged within said segment,
and/or

c) the vibration damping is carried out by driving the actuator of the rotary support, wherein the vibration damping takes into account the torsion of at least one segment (4-7) and/or of the articulated arm.

15. Concrete pump, in particular an automatic concrete pump, comprising a large manipulator according to any one of the preceding claims 1-12, wherein the articulated arm serves as a distribution boom along which a concrete pipe is guided.

16. Method for driving a large manipulator and/or a concrete pump according to any one of the preceding claims 1-12 or 15, wherein

a) the measurement signals of at least one rotation rate sensor (18-21) are integrated into the vibration damping and the measurement signals of sensors associated with the rotary joints (B-E) of the large manipulator are integrated into the control for indirectly or directly measuring the respective angle of rotation of the joints of the articulated arm, and wherein the vibration damping determines a vibration state of the entire articulated arm on the basis of the measured values of the at least one rotation rate sensor (18-21) from the vibrations of the individual segments (4-7),
and/or
b) the vibration damping is carried out using a physical model of the articulated arm, in which the flexibility of at least one segment (4-7) is described by at least one virtual joint arranged within said segment,
and/or
c) the vibration damping is carried out by driving the actuator of the rotary support, wherein the vibration damping takes into account the torsion of at least one segment (4-7) and/or of the articulated arm and dampens a torsional vibration of the articulated arm.

**Revendications**

1. Manipulateur de grande taille, en particulier pour des pompes à béton, avec

un bras d'articulation, lequel présente un support de rotation (3) pouvant tourner autour d'un axe vertical (A) et au moins deux segments (4 - 7) pouvant pivoter autour d'axes horizontaux au moyen d'articulations (B - E), dans lequel le support de rotation (3) peut être déplacé autour de l'axe vertical par l'intermédiaire d'un actionneur et les segments (4 - 7) peuvent être pivotés autour des axes horizontaux par l'intermédiaire d'actionneurs (14 - 17),
une commande permettant de piloter les actionneurs (14 - 17), dans lequel la commande comprend un amortissement de vibrations pour amortir des vibrations horizontales et/ou verticales du bras d'articulation, et
au moins un capteur de vitesse de rotation (18 - 21), dont des signaux de mesure sont intégrés dans l'amortissement de vibrations,
**caractérisé en ce**
**que** le manipulateur de grande taille comprend des capteurs associés aux articulations rotatives (B - E) permettant de mesurer indirectement ou directement l'angle de rotation respectif des articulations du bras d'articulation, dans lequel les signaux de mesure des capteurs sont intégrés dans la commande du manipulateur de grande taille, et que l'amortissement de vibrations définit, sur la base des valeurs de mesure de l'au moins un capteur de vitesse de rotation (18 - 21) à partir des vibrations des divers segments (4 - 7), un état de vibration de la totalité du bras d'articulation, dans lequel l'amortissement de vibrations est effectué de manière préférée sans l'utilisation de capteurs géodésiques et/ou d'unités de mesure inertielle et/ou de capteurs de déformation disposés sur les segments (4 - 7).

2. Manipulateur de grande taille selon la revendication 1, dans lequel au moins un capteur de vitesse de rotation (18 - 20) est disposé dans une zone avant d'un segment (4 - 6), lequel est disposé dans le bras d'articulation entre le support de rotation (3) et un segment (7) formant la pointe de mât (22), et/ou dans lequel des capteurs de vitesse de rotation sont disposés sur au moins deux segments (4 - 7), dans lequel de manière préférée l'amortissement de vibrations définit, sur la base des valeurs de mesure des au moins deux capteurs de vitesse de rotation (18 - 20), à partir des vibrations, un état de vibration de la totalité du bras, et/ou dans lequel les capteurs de vitesse de rotation (18 - 21) sont disposés respectivement dans une zone avant des segments (4-7), et/ou dans lequel les au moins deux segments (4 - 6) sont disposés dans le bras d'articulation entre le support de rotation (3) et un segment (7) formant la pointe de mât (22) et un autre capteur de vitesse de rotation (21) est disposé par ailleurs de manière préférée sur le segment (7) formant la pointe de mât (22).

3. Manipulateur de grande taille selon la revendication 1 ou 2, dans lequel les signaux de mesure des capteurs associés aux articulations rotatives (B - E) sont intégrés dans l'amortissement de vibrations et/ou servent à définir la position instantanée du bras d'articulation.

**4.** Manipulateur de grande taille, en particulier pour des pompes à béton, avec

un bras d'articulation, lequel présente un support de rotation (3) pouvant tourner autour d'un axe vertical (A) et/ou au moins un segment (4 - 7) pouvant pivoter autour d'un axe horizontal au moyen d'une articulation (B - E), dans lequel le support de rotation (3) peut être déplacé autour de l'axe vertical par l'intermédiaire d'un actionneur et/ou l'au moins un segment (4 - 7) peut être pivoté autour de l'axe horizontal par l'intermédiaire d'un actionneur (14 - 17), et une commande permettant de piloter les actionneurs (14 - 17), dans lequel la commande comprend un amortissement de vibrations permettant d'amortir des vibrations horizontales et/ou verticales du bras d'articulation, **caractérisé en ce que** l'amortissement de vibrations est effectué en utilisant un modèle physique du bras d'articulation, dans lequel la flexibilité d'au moins un segment (4 - 7) est décrite par au moins une articulation virtuelle disposée à l'intérieur dudit segment.

**5.** Manipulateur de grande taille selon la revendication 4, dans lequel le modèle physique est un modèle de corps rigide avec des articulations actionnées, et/ou dans lequel un élément de ressort et un élément d'amortissement sont associés à l'articulation virtuelle, dans lequel la constante de ressort et la constante d'amortissement sont sélectionnées de manière préférée de telle sorte que l'articulation virtuelle décrit la taille de l'inflexion et/ou de la torsion et/ou la première fréquence propre du segment réel (4 - 7), et/ou dans lequel plusieurs et de manière préférée tous les segments (4 - 7) sont décrits par une articulation virtuelle disposée à l'intérieur du segment (4 - 7) respectif, et/ou dans lequel précisément une articulation virtuelle est prévue à l'intérieur du segment (4 - 7), et/ou dans lequel l'articulation virtuelle présente au moins deux et de manière préférée trois degrés de liberté du mouvement.

**6.** Manipulateur de grande taille, en particulier selon l'une quelconque des revendications précédentes, en particulier pour des pompes à béton, avec un bras d'articulation, lequel présente un support de rotation pouvant tourner autour d'un axe vertical et au moins un segment pouvant pivoter autour d'un axe horizontal au moyen d'une articulation, dans lequel le support de rotation peut être déplacé autour de l'axe vertical par l'intermédiaire d'un actionneur et l'au moins un segment peut être pivoter autour de l'axe horizontal par l'intermédiaire d'un actionneur, et avec une commande permettant de piloter les actionneurs, dans lequel la commande comprend un amortissement de vibrations permettant d'amortir des vibrations horizontales du bras d'articulation, laquelle est effectuée par le pilotage de l'acteur du support de rotation, **caractérisé en ce que** l'amortissement de vibrations tient compte de la torsion d'au moins un segment (4 - 7) et/ou du bras d'articulation.

**7.** Manipulateur de grande taille selon la revendication 6, dans lequel l'amortissement de vibrations tient compte de la torsion d'au moins un segment (4 - 7) et/ou du bras d'articulation par un modèle physique du bras d'articulation, lequel décrit une torsion du bras d'articulation et/ou d'un ou de plusieurs segments (4 - 7) du bras d'articulation, en particulier par l'intermédiaire d'au moins une articulation rotative virtuelle s'étendant dans le sens longitudinal du segment (4 - 7), et/ou dans lequel le manipulateur de grande taille présente au moins deux capteurs de vitesse de rotation (18 - 21) disposés sur différents segments (4 - 7), dans lequel la torsion est définie à partir d'une comparaison des valeurs de mesure des capteurs de vitesse de rotation (18 - 21), dans lequel les capteurs de vitesse de rotation (18 - 21) présentent de manière préférée au moins deux directions de sensibilité, en particulier une première direction de sensibilité horizontale et une deuxième direction de sensibilité s'étendant dans un plan vertical.

**8.** Manipulateur de grande taille selon l'une quelconque des revendications précédentes, dans lequel la commande comprend un observateur, lequel évalue l'état du bras d'articulation, en particulier sur la base des valeurs de mesure des capteurs de vitesse de rotation (18 - 21) selon l'une quelconque des revendications 1 à 3 ou 7 et/ou du modèle physique selon l'une quelconque des revendications 4 à 5 ou 7.

**9.** Manipulateur de grande taille selon l'une quelconque des revendications précédentes, dans lequel l'amortissement de vibrations comprend une régulation, laquelle est effectuée par réintégration d'au moins une des grandeurs suivantes : vitesse et position d'une ou de plusieurs des articulations (B - E), vitesses et positions de l'inflexion et/ou de la torsion d'un ou de plusieurs des segments (4 - 7), dans lequel les grandeurs réintégrées sont évaluées de manière préférée par un observateur, en particulier un observateur selon la revendication 8.

**10.** Manipulateur de grande taille selon l'une quelconque des revendications 4 à 9, dans lequel une évaluation de l'état de système et/ou l'amortissement de vibrations, en particulier une évaluation par un observateur selon la revendication 8 et/ou une régulation selon la revendication 9, sont effectués sur la base d'une linéarisation d'un modèle physique, dans lequel la linéarisation est effectuée de manière préférée autour de la position d'équilibre de la position instantanée du bras d'articulation et/ou dans lequel la linéarisation est réalisée par la commande en fonction de la position instantanée du bras d'articulation.

11. Manipulateur de grande taille selon l'une quelconque des revendications précédentes, dans lequel la commande comprend une précommande, laquelle calcule à partir d'une valeur théorique prédéfinie par un utilisateur des signaux de pilotage, par lesquels le déplacement de mât souhaité est mis en oeuvre et une excitation de vibrations du bras d'articulation est réduite, dans lequel de manière préférée des fréquences propres du bras d'articulation sont supprimées, lesquelles sont définies de manière préférée en fonction de la position instantanée du bras d'articulation et/ou dans lequel la commande comprend des régulateurs axiaux associés aux articulations (B - E) respectives, dans lequel la commande génère des signaux de pilotage pour la vitesse angulaire théorique des axes, sur la base de laquelle le régulateur axial associé à l'articulation (B - E) respective génère des signaux de pilotage pour l'actionneur (14 - 17) respectif, dans lequel les régulateurs axiaux reposent de manière préférée sur une cinématique de renvoi inverse et/ou comprennent une non-linéarité inverse du mécanisme hydraulique.

12. Manipulateur de grande taille selon l'une quelconque des revendications précédentes, dans lequel le bras d'articulation fait office de mât de distribution, le long lequel un conduit de béton est guidé, lequel est chargé en béton par une pompe de refoulement (1), dans lequel de manière préférée la commande comprend une précompensation permettant de réduire les vibrations, induites par le refoulement de béton, du mât de distribution, dans lequel la précompensation est effectuée par ailleurs de manière préférée sur la base d'un modèle physique du refoulement de béton, lequel décrit les forces perturbatrices liées à l'écoulement du refoulement de béton sur le mât de distribution ou la précompensation évalue les forces perturbatrices à partir de valeurs de mesure de la position et/ou de l'état de vibration du mât de distribution.

13. Logiciel de commande pour un manipulateur de grande taille selon l'une quelconque des revendications précédentes, dans lequel le logiciel de commande implémente, lors de son exécution, une commande permettant de piloter les actionneurs du manipulateur de grande taille avec un amortissement de vibrations pour amortir des vibrations horizontales et/ou verticales du bras d'articulation, dans lequel

a) les signaux de mesure d'au moins un capteur de vitesse de rotation (18 - 21) sont intégrés dans l'amortissement de vibrations et les signaux de mesure de capteurs associés aux articulations rotatives (B - E) du manipulateur de grande taille sont intégrés dans la commande pour mesurer indirectement ou directement l'angle de rotation respectif des articulations du bras d'articulation, et dans lequel l'amortissement de vibrations définit, sur la base des valeurs de mesure de l'au moins un capteur de vitesse de rotation (18 - 21) à partir des vibrations des divers segments (4 - 7), un état de vibration de l'ensemble du bras d'articulation,
et/ou

b) l'amortissement de vibrations est effectué en utilisant un modèle physique du bras d'articulation, dans lequel la flexibilité d'au moins un segment (4 - 7) est décrite par au moins une articulation virtuelle disposée à l'intérieur dudit segment,
et/ou

c) l'amortissement de vibrations est effectué par le pilotage de l'acteur du support de rotation, dans lequel l'amortissement de vibrations tient compte de la torsion d'au moins un segment (4 - 7) et/ou du bras d'articulation.

14. Commande pour un manipulateur de grande taille selon l'une quelconque des revendications précédentes, permettant de piloter les actionneurs (14 - 17) du manipulateur de grande taille, dans laquelle la commande comprend un amortissement de vibrations pour amortir des vibrations horizontales et/ou verticales du bras d'articulation, dans lequel

a) les signaux de mesure d'au moins un capteur de vitesse de rotation (18 - 21) sont intégrés dans l'amortissement de vibrations et les signaux de mesure de capteurs associés aux articulations rotatives (B - E) du manipulateur de grande taille sont intégrés dans la commande pour mesurer indirectement ou directement l'angle de rotation respectif des articulations du bras d'articulation, et dans lequel l'amortissement de vibrations définit un état de vibrations de l'ensemble du bras d'articulation sur la base des valeurs de mesure de l'au moins un capteur de vitesse de rotation (18 - 21) à partir des vibrations des divers segments (4 - 7),
et/ou

b) l'amortissement de vibrations est effectué en utilisant un modèle physique du bras d'articulation, dans lequel la flexibilité d'au moins un segment (4 - 7) est décrite par au moins une articulation virtuelle disposée à l'intérieur dudit segment,
et/ou

c) l'amortissement de vibrations est effectué par le pilotage de l'acteur du support de rotation, dans lequel l'amortissement de vibrations tient compte de la torsion d'au moins un segment (4 - 7) et/ou du bras d'articulation.

15. Pompe à béton, en particulier pompe à béton automatique, avec un manipulateur de grande taille selon l'une quelconque des revendications précédentes, 1 - 12, dans laquelle le bras d'articulation fait office de mât de distribution, le long duquel un conduit de béton est guidé.

16. Procédé pour piloter un manipulateur de grande taille et/ou une pompe à béton selon l'une quelconque des revendications précédentes 1 - 12 ou 15, dans lequel

a) les signaux de mesure d'au moins un capteur de vitesse de rotation (18 - 21) sont intégrés dans l'amortissement de vibrations et les signaux de mesure de capteurs associés aux articulations rotatives (B - E) du manipulateur de grande taille sont intégrés dans la commande pour mesurer indirectement ou directement l'angle de rotation respectif des articulations du bras d'articulation, et dans lequel l'amortissement de vibrations définit, sur la base des valeurs de mesure de l'au moins un capteur de vitesse de rotation (18 - 21) à partir des vibrations des divers segments (4 - 7), un état de vibration de l'ensemble du bras d'articulation,
et/ou
b) l'amortissement de vibrations est effectué en utilisant un modèle physique du bras d'articulation, dans lequel la flexibilité d'au moins un segment (4 - 7) est décrite par au moins une articulation virtuelle disposée à l'intérieur dudit segment,
et/ou
c) l'amortissement de vibrations est effectué par le pilotage de l'acteur du support de rotation, dans lequel l'amortissement de vibrations tient compte de la torsion d'au moins un segment (4 - 7) et/ou du bras d'articulation et amortit une vibration de torsion du bras d'articulation.

Fig. 1

Fig. 2

BETON-FÖRDERUNG

STÖRGRÖSSE

VERTEILER-MAST

MESS-WERTE

STELL-GRÖSSEN

SCHWINGUNGSDÄMPFUNG

STÖRGRÖSSEN-AUFSCHALTUNG

VORSTEUERUNG

REGELUNG

BEOBACHTER

GEOMETRIE-STEUERUNG

HAND-HEBEL

Fig. 3

Fig. 4

EP 3 556 967 B1

Fig. 5

Fig. 6

EP 3 556 967 B1

Fig. 7

PUMPDRUCK
PUMPFREQUENZ
ZYLINDERPOSITION

| BETONFÖRDERUNG |

| STÖRGRÖSSEN-AUFSCHALTUNG |

STELL-GRÖSSEN

| VERTEILERMAST |

Fig. 8

STÖRGRÖSSENAUFSCHALTUNG

PUMPDRUCK
PUMPFREQUENZ
ZYLINDERPOSITION

BETONFÖRDER-
MODELL

BETON-
FÖRDERUNG

$F_d$

$F_d$

STÖRMODELL
REGELKREIS

$u_d$

$u$

VERTEILERMAST

$y$

$u_c$

$\omega_{\text{soll}}$

HAND-
HEBEL

GEOMETRIE-,
VORSTEUERUNG

$\omega_{\text{soll}}$

$y_d$

REGELUNG

EP 3 556 967 B1

**Fig. 9**

EP 3 556 967 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014165889 A1
- WO 2016131977 A1
- EP 2103760 B1
- CN 105317217 B
- JP H10331426 A
- EP 1537282 B1
- EP 2778466 A1
- EP 1122380 B1
- DE 10101570 B4

**In der Beschreibung aufgeführte Nicht-Patentliteratur**

- **XIE GANG et al.** Modelling and Simulation of the Coupled Rigid-Flexible Multibody Systems in MWorks. *Proceedings of the 48th Scandinavian conference in simulation and modeling (SIMS 2007),* 2012, vol. 76, 405-416